# EUROPEAN PATENT SPECIFICATION

(11) **EP 3 648 485 B1**
(45) Date of publication and mention of the grant of the patent: **11.09.2024**
(21) Application number: 18838765.8
(22) Date of filing: 24.07.2018
(51) Int. Cl.: H04W 4/06

(54) **MULTICAST DATA TRANSMISSION METHOD, RELATED DEVICE AND COMMUNICATION SYSTEM**
MULTICAST-DATENÜBERTRAGUNGSVERFAHREN, ZUGEHÖRIGE VORRICHTUNG UND KOMMUNIKATIONSSYSTEM
PROCÉDÉ DE TRANSMISSION DE DONNÉES DE MULTIDIFFUSION, DISPOSITIF ASSOCIÉ ET SYSTÈME DE COMMUNICATION

(30) Priority: 28.07.2017 CN 201710636491
(43) Date of publication of application: 06.05.2020
(73) Proprietor: Huawei Technologies Co., Ltd., Longgang District Shenzhen, Guangdong 518129 (CN)
(72) Inventor: LI, Dong, Shenzhen Guangdong 518129 (CN); WANG, Yan, Shenzhen Guangdong 518129 (CN)
(74) Representative: Maiwald GmbH
(86) International application number: PCT/CN2018/096773
(87) International publication number: WO 2019/019997

(56) References cited:
- EP-A1- 3 301 997
- WO-A1-2017/004771
- CN-A- 102 118 691
- CN-A- 102 857 873
- CN-A- 105 764 034
- US-A1- 2015 195 684
- US-B1- 9 049 030

## Description

### TECHNICAL FIELD

Embodiments of the present invention relate to the field of communications technologies, and in particular, to a multicast data transmission method, a related device, and a communications system.

### BACKGROUND

A fifth generation (the fifth generation, 5G) communications technology supports an ultra-reliable and low-latency machine-type communication (Ultra Reliable & Low Latency Machine Type Communication, uMTC) application scenario. Most uMTC services are local and independent of the Internet (Internet). For example, uMTC may be applied to an internet of vehicles application. A vehicle only needs to notify another vehicle, an object, and a pedestrian nearby the vehicle of information such as a current location and a current speed of the vehicle by unicast or broadcast. Based on a flexible architecture of a mobile operator, the mobile operator may establish a local area network (Local Area Network, LAN) to support the uMTC service.

Multicast packets of terminal devices in a same LAN are forwarded by using a gateway. After receiving multicast data sent by a source terminal device, the gateway searches, based on a local multicast table and an identifier of a LAN to which the source terminal device belongs, a list of terminal devices that are at a receive end and that belong to the same LAN as the source terminal device; performs duplication and general packet radio service tunnelling protocol (General Packet Radio Service TunnellingProtocol, GTP) encapsulation on the multicast data; and sends the multicast data by using a downlink unicast bearer of each terminal device at the receive end, to complete a multicast process. In an existing multicast process, if there are a large quantity of terminal devices at a receive end, a gateway performs duplication and GTP encapsulation on multicast data in a same LAN for a plurality of times. A quantity of times for which replication and GTP encapsulations are performed is equal to a quantity of terminal devices at the receive end. Therefore, a large quantity of overheads are caused in the gateway, resulting in decreased processing efficiency of the gateway.
US 2015/0195684 A1 relates to controlling transmission of multicast data in a cellular network.
WO 2017/004771 A1 relates to an enhanced multimedia broadcast and multicast service eMBMS system.

### SUMMARY

The present invention provides a method according to claim 1, a corresponding method according to claim 6 and corresponding core network and access network devices according to claims 10 and 11, respectively. Embodiments of the present invention provide a multicast data transmission method, a related device, and a communications system, which can reduce a quantity of times for which replication and encapsulation operations are performed by a core network user plane device on multicast data, thereby reducing overheads of the core network user plane device and improving processing efficiency of the core network user plane device.

The embodiments of the present invention may be specifically implemented by using the following technical solutions:
According to a first aspect, an embodiment of the present invention provides a multicast data transmission method, applied to a core network control plane device side. The method includes the following steps: A core network control plane device receives a multicast message from a core network user plane device, where the multicast message carries an identifier of a source terminal device sending multicast data and an identifier of a target multicast group corresponding to the multicast data, and the target multicast group corresponding to the multicast data is also a multicast group to which the source terminal device belongs. The core network control plane device sends an identifier of a target access network device that is to receive the multicast data to the core network user plane device based on the identifier of the source terminal device, the identifier of the target multicast group, and a first multicast table, where the target access network device is an access network device accessed by a terminal device that belongs to the target multicast group in a target local area network, the target local area network is a local area network to which the source terminal device belongs, the first multicast table includes identifiers of terminal devices that join a local area network, an identifier of the local area network to which the terminal devices belong, an identifier of a multicast group to which the terminal devices belong, and an identifier of an access network device accessed by the terminal devices, and the terminal devices include the source terminal device. In this embodiment of the present invention, after the core network user plane device receives the multicast data, the core network control plane device sends the identifier of the target access network device accessed by a target terminal device that needs to receive the multicast data to the core network user plane device, so that the core network user plane device sends the multicast data to the target access network device. Compared with the prior art in which a core network user plane device sends the multicast data to each terminal device by using a bearer of a target terminal device, in this embodiment of the present invention, the core network user plane device sends multicast data that belongs to a specific multicast group in a local area network to one access network device only once. Therefore, a quantity of times for which replication operations are performed by the core network user plane device on the multicast data are reduced, overheads of the core network user plane device are reduced, and processing efficiency of the core network user plane device is improved.

In a possible implementation, after the core network control plane device receives the multicast message from the core network user plane device, the core network control plane device further sends a second multicast table to the target access network device, where the second multicast table includes a mapping relationship between an identifier of a target terminal device and the identifier of the target multicast group, and the target terminal device is a terminal device that belongs to the target multicast group in the target local area network and that accesses the target access network device. In this embodiment of the present invention, the core network control plane device sends the second multicast table to the target access network device. After receiving the multicast data from the core network user plane device, the target access network device may send, based on the second multicast table, the multicast data to a target terminal device that needs to receive the multicast data. Therefore, an access network device may multicast distribution, which can reduce load of the core network user plane device, compared with the prior art in which a core network user plane device distributes multicast data to each terminal device.

In a possible implementation, a mapping relationship included in the second multicast table is a mapping relationship between the identifier of the target terminal device, an identifier of the target local area network, and the identifier of the target multicast group. In this embodiment of the present invention, the core network control plane device sends the mapping relationship between the identifier of the target terminal device, the identifier of the target local area network, and the identifier of the target multicast group to the target access network device, so that the target access network device sends the multicast data to a target terminal device that needs to receive the multicast data based on the mapping relationship between the identifier of the target terminal device, the identifier of the target local area network, and the identifier of the target multicast group after receiving the multicast data that is from the source terminal device and that is sent by the core network user plane device.

In a possible implementation, a mapping relationship included in the second multicast table is a mapping relationship between the identifier of the target terminal device, an identifier of the target local area network, and the identifier of the target multicast group. After the core network control plane device receives the multicast message from the core network user plane device, the method further includes the following step: The core network control plane device sends a mapping relationship between the identifier of the source terminal device and the identifier of the target local area network to the target access network device. In this embodiment of the present invention, the core network control plane device sends the mapping relationship between the identifier of the source terminal device and the identifier of the target local area network to the target access network device. After receiving the multicast data that is from the source terminal device and that is sent by the core network user plane device, the target access network device learns the identifier of the target local area network based on the identifier that is of the source terminal device and that is carried in the multicast data and the mapping relationship between the identifier of the source terminal device and the identifier of the target local area network. Then, the target access network device can correctly identify a specific multicast group that is in a specific local area network and that has data corresponding to the multicast data based on the identifier of the target local area network and the identifier of the target multicast group carried in the multicast data.

In a possible implementation, a mapping relationship included in the second multicast table is a mapping relationship between the identifier of the target terminal device, an identifier of the target local area network, and the identifier of the target multicast group. After the core network control plane device receives the multicast message from the core network user plane device, the method further includes the following step: The core network control plane device sends the identifier of the target local area network to the core network user plane device, where the identifier of the target local area network is used by the core network user plane device to add the identifier of the target local area network to the multicast data when the core network user plane device sends the multicast data to the target access network device. In this embodiment of the present invention, the core network control plane device adds the identifier of the target local area network to the multicast data through the core network user plane device, and sends multicast data to the target access network device. After receiving the multicast data that is from the source terminal device and that is sent by the core network user plane device, the target access network device can correctly identify a specific multicast group that is in a specific local area network and that has data corresponding to the multicast data based on the identifier of the target local area network and the identifier of the target multicast group.

In a possible implementation, before the core network control plane device receives the multicast message from the core network user plane device, the core network control plane device further sends a request message to the core network user plane device, where the request message is used to request the core network user plane device to establish a multicast tunnel with the target access network device, and the multicast tunnel is used to transmit the multicast data. In this embodiment of the present invention, a dedicated multicast tunnel is established, so that the multicast data can be transmitted from the core network user plane device to the target access network device.

In a possible implementation, after the core network control plane device receives the multicast message from the core network user plane device, and before the core network control plane device sends the identifier of the target access network device that is to receive the multicast data to the core network user plane device, the core network control plane device further searches the first multicast table based on the identifier of the source terminal device, to obtain the identifier that is of the target local area network and that corresponds to the identifier of the source terminal device. The core network control plane device searches the first multicast table based on the identifier of the target local area network and the identifier of the target multicast group, to obtain the identifier that is of the target terminal device and that corresponds to the identifier of the target local area network and the identifier of the target multicast group. The core network control plane device searches the first multicast table based on the identifier of the target terminal device, to obtain the identifier that is of the target access network device and that corresponds to the identifier of the target terminal device.

In a possible implementation, a mapping relationship included in the second multicast table is the mapping relationship between the identifier of the target terminal device, the identifier of the target local area network, and the identifier of the target multicast group. After the core network control plane device sends the second multicast table to the target access network device and the source terminal device is handed over from a first access network device to a second access network device, the core network control plane device further updates the identifier that is of the source terminal device and that is recorded in the first multicast table, and updates an identifier that is of the first access network device accessed by the source terminal device and that is recorded in the first multicast table to an identifier of the second access network device. The core network control plane device sends a first request to the first access network device, where the first request is used to instruct the first access network device to delete a mapping relationship between the identifier of the source terminal device and an identifier of a multicast group to which the source terminal device belongs from a multicast table stored in the first access network device. The core network control plane device sends, to the second access network device, the mapping relationship between the identifier of the source terminal device and the identifier of the multicast group to which the source terminal device belongs. In this embodiment of the present invention, after the source terminal device is handed over from one access network device to another access network device, a multicast table is updated, so that information recorded in the multicast table can be accurate. This improves accuracy of sending multicast data by an access network device. In addition, the source terminal device may join another multicast group and become a multicast receiver. Therefore, it is ensured that a terminal device can normally receive multicast data by updating a multicast table of the access network device in a timely manner.

In a possible implementation, a mapping relationship included in the second multicast table is the mapping relationship between the identifier of the target terminal device, the identifier of the target local area network, and the identifier of the target multicast group. After the core network control plane device sends the second multicast table to the target access network device and the source terminal device is handed over from a first access network device to a second access network device, the core network control plane device further updates the identifier that is of the source terminal device and that is recorded in the first multicast table, and updates an identifier that is of the first access network device accessed by the source terminal device and that is recorded in the first multicast table to an identifier of the second access network device. The core network control plane device sends a first request to the first access network device, where the first request is used to instruct the first access network device to delete a mapping relationship between the identifier of the source terminal device, the identifier of the target local area network, and an identifier of a multicast group to which the source terminal device belongs from a multicast table stored in the first access network device. The core network control plane device sends, to the second access network device, the mapping relationship between the identifier of the source terminal device, the identifier of the target local area network, and the identifier of the multicast group to which the source terminal device belongs. In this embodiment of the present invention, after the source terminal device is handed over from one access network device to another access network device, a multicast table is updated, so that information recorded in the multicast table can be accurate. This improves accuracy of sending multicast data by an access network device. In addition, the source terminal device may join another multicast group and become a multicast receiver. Therefore, it is ensured that a terminal device can normally receive multicast data by updating a multicast table of the access network device in a timely manner.

In a possible implementation, a mapping relationship included in the second multicast table is the mapping relationship between the identifier of the target terminal device and the identifier of the target multicast group. After the core network control plane device sends the second multicast table to the target access network device, the core network control plane device determines that the source terminal device leaves the target multicast group. The core network control plane device sends a second request to the first access network device accessed by the source terminal device, where the second request is used to instruct the first access network device to delete a mapping relationship between the identifier of the source terminal device and the identifier of the target multicast group from the multicast table stored in the first access network device. In this embodiment of the present invention, after the source terminal device leaves the target multicast group, a multicast table is updated, which can avoid an unnecessary multicast forwarding operation. Because the source terminal device leaves the target multicast group, multicast data of the target multicast group may be no longer received.

In a possible implementation, a mapping relationship included in the second multicast table is the mapping relationship between the identifier of the target terminal device, the identifier of the target local area network, and the identifier of the target multicast group. After the core network control plane device sends the second multicast table to the target access network device, the core network control plane device determines that the source terminal device leaves the target multicast group. The core network control plane device sends a second request to the first access network device accessed by the source terminal device, where the second request is used to instruct the first access network device to delete a mapping relationship between the identifier of the source terminal device, the identifier of the target local area network, and the identifier of the target multicast group from the multicast table stored in the first access network device. In this embodiment of the present invention, after the source terminal device leaves the target multicast group, a multicast table is updated, which can avoid an unnecessary multicast forwarding operation. Because the source terminal device leaves the target multicast group, multicast data of the target multicast group may be no longer received.

In a possible implementation, the core network control plane device may directly send the second multicast table to the target access network device. Alternatively, the core network control plane device may send the second multicast table to the target access network device through the core network user plane device.

In a possible implementation, the identifier of the source terminal device may be an international mobile subscriber identity (International Mobile Subscriber Identity, IMSI), an international mobile equipment identity (International Mobile Equipment Identity, IMEI), or a tunnel endpoint identity (TunnelEndpoint Identity, TEID) of the source terminal device. The identifier of the source terminal device may further be a session identity (session Identity) corresponding to a service of the source terminal device or a flow identity (flow Identity) corresponding to a service of the source terminal device. An identifier of a multicast group may be an internet protocol (Internet Protocol, IP) address of the multicast group.

According to a second aspect, an embodiment of the present invention provides a multicast data transmission method, applied to a core network user plane device side. The method includes the following steps: A core network user plane device receives multicast data from a source terminal device. The core network user plane device sends a multicast message to a core network control plane device, where the multicast message carries an identifier of the source terminal device and an identifier of a target multicast group corresponding to the multicast data. The core network user plane device receives, from the core network control plane device, an identifier of a target access network device that is to receive the multicast data, where the target access network device is an access network device accessed by a terminal device that belongs to the target multicast group in a target local area network, and the target local area network is a local area network to which the source terminal device belongs. The core network user plane device sends the multicast data to the target access network device based on the identifier of the target access network device. In this embodiment of the present invention, after receiving the multicast data, the core network user plane device informs the core network control plane device, receives, from the core network control plane device, the identifier of the target access network device accessed by a target terminal device that needs to receive the multicast data, and sends the multicast data to the target access network device. Compared with the prior art in which a core network user plane device sends the multicast data to each terminal device by using a bearer of a target terminal device, in this embodiment of the present invention, the core network user plane device sends multicast data that belongs to a specific multicast group in a local area network to one access network device only once. Therefore, a quantity of times for which replication operations are performed by the core network user plane device on the multicast data are reduced, overheads of the core network user plane device are reduced, and processing efficiency of the core network user plane device is improved.

In a possible implementation, after the core network user plane device sends the multicast message to the core network control plane device, the core network user plane device receives an identifier of the target local area network from the core network control plane device. That the core network user plane device sends the multicast data to the target access network device based on the identifier of the target access network device includes the following step: The core network user plane device adds the identifier of the target local area network to the multicast data based on the identifier of the target access network device, and sends, to the target access network device, multicast data to which the identifier of the target local area network is added. In this embodiment of the present invention, the core network user plane device adds the identifier of the target local area network to the multicast data and sends multicast data to the target access network device. After receiving the multicast data that is from the source terminal device and that is sent by the core network user plane device, the target access network device can correctly identify a specific multicast group that is in a specific local area network and that has data corresponding to the multicast data based on the identifier of the target local area network and the identifier of the target multicast group.

In a possible implementation, before the core network user plane device sends the multicast data to the target access network device based on the identifier of the target access network device, the core network user plane device further receives a request message from the core network control plane device. The core network user plane device establishes a multicast tunnel with the target access network device based on the request message, and the multicast tunnel is used to transmit the multicast data. In this embodiment of the present invention, a dedicated multicast tunnel is established, so that the multicast data can be transmitted from the core network user plane device to an access network device.

In a possible implementation, an identifier of the source terminal device may be an IMSI, an IMEI, or a TEID of the source terminal device. The identifier of the source terminal device may further be a session identity corresponding to a service of the source terminal device or a flow identity corresponding to a service of the source terminal device. An identifier of a multicast group may be an IP address of the multicast group.

According to a third aspect, an embodiment of the present invention provides a multicast data transmission method, applied to an access network device side. The method includes the following steps: A target access network device receives a second multicast table from a core network control plane device, where the second multicast table includes a mapping relationship between an identifier of a target terminal device and an identifier of a target multicast group, a source terminal device belongs to the target multicast group in a target local area network, the target multicast group is a multicast group corresponding to multicast data sent by the source terminal device, and the target terminal device is a terminal device that belongs to the target multicast group in the target local area network and that accesses the target access network device. The target access network device receives the multicast data sent by the source terminal device from a core network user plane device. The target access network device sends, based on the second multicast table, the multicast data to the target terminal device corresponding to an identifier of the target local area network and the identifier of the target multicast group in the second multicast table. In this embodiment of the present invention, an access network device may multicast distribution, which can reduce load of the core network user plane device, compared with the prior art in which a core network user plane device distributes multicast data to each terminal device.

In a possible implementation, a mapping relationship included in the second multicast table is a mapping relationship between the identifier of the target terminal device, an identifier of the target local area network, and the identifier of the target multicast group. The target access network device determines, based on the mapping relationship, to send the multicast data to specific target terminal devices.

In a possible implementation, a mapping relationship included in the second multicast table is a mapping relationship between the identifier of the target terminal device, an identifier of the target local area network, and the identifier of the target multicast group. Before sending, based on the second multicast table, the multicast data to the target terminal device corresponding to the identifier of the target multicast group, the target access network device receives a mapping relationship between an identifier of the source terminal device and the identifier of the target local area network from the core network control plane device. In this embodiment of the present invention, after receiving the multicast data that is from the source terminal device and that is sent by the core network user plane device, the target access network device learns the identifier of the target local area network based on the identifier that is of the source terminal device and that is carried in the multicast data and the mapping relationship between the identifier of the source terminal device and the identifier of the target local area network. Then, the target access network device can correctly identify a specific multicast group that is in a specific local area network and that has data corresponding to the multicast data based on the identifier of the target local area network and the identifier of the target multicast group carried in the multicast data.

In a possible implementation, a mapping relationship included in the second multicast table is a mapping relationship between the identifier of the target terminal device, an identifier of the target local area network, and the identifier of the target multicast group. The multicast data received by the target access network device from the core network user plane device carries the identifier of the target local area network. In this embodiment of the present invention, the target access network device can correctly identify a specific multicast group that is in a specific local area network and that has data corresponding to the multicast data based on the second multicast table and the multicast data.

In a possible implementation, before the target access network device receives the multicast data sent by the source terminal device from the core network user plane device, the target access network device establishes a multicast tunnel with the core network user plane device, and the multicast tunnel is used to transmit the multicast data. In this embodiment of the present invention, a dedicated multicast tunnel is established, so that the multicast data can be transmitted from the core network user plane device to an access network device.

In a possible implementation, a mapping relationship included in the second multicast table is the mapping relationship between the identifier of the target terminal device and the identifier of the target multicast group. If the target access network device is a first access network device accessed by the source terminal device, and the source terminal device is handed over from the first access network device to a second access network device, after receiving the second multicast table from the core network control plane device, the target access network device receives a first request from the core network control plane device and deletes, based on the first request, a mapping relationship between the identifier of the source terminal device and an identifier of a multicast group to which the source terminal device belongs from the second multicast table. If the source terminal device is handed over from a first access network device to a second access network device, and the target access network device is the first access network device, after the target access network device receives the second multicast table from the core network control plane device, the target access network device further receives a mapping relationship between the identifier of the source terminal device and an identifier of a multicast group to which the source terminal device belongs from the core network control plane device. In this embodiment of the present invention, after the source terminal device is handed over from one access network device to another access network device, a multicast table is updated, so that information recorded in the multicast table can be accurate. This improves accuracy of sending multicast data by an access network device. In addition, the source terminal device may join another multicast group and become a multicast receiver. Therefore, it is ensured that a terminal device can normally receive multicast data by updating a multicast table of the access network device in a timely manner.

In a possible implementation, a mapping relationship included in the second multicast table is the mapping relationship between the identifier of the target terminal device, the identifier of the target local area network, and the identifier of the target multicast group. If the target access network device is a first access network device accessed by the source terminal device, and the source terminal device is handed over from the first access network device to a second access network device, after receiving the second multicast table from the core network control plane device, the target access network device receives a first request from the core network control plane device and deletes, based on the first request, a mapping relationship between the identifier of the source terminal device, the identifier of the target local area network, and an identifier of a multicast group to which the source terminal device belongs from the second multicast table. If the source terminal device is handed over from a first access network device to a second access network device, and the target access network device is the first access network device, after the target access network device receives the second multicast table from the core network control plane device, the target access network device further receives a mapping relationship between the identifier of the source terminal device, the identifier of the target local area network, and an identifier of a multicast group to which the source terminal device belongs from the core network control plane device. In this embodiment of the present invention, after the source terminal device is handed over from one access network device to another access network device, a multicast table is updated, so that information recorded in the multicast table can be accurate. This improves accuracy of sending multicast data by an access network device. In addition, the source terminal device may join another multicast group and become a multicast receiver. Therefore, it is ensured that a terminal device can normally receive multicast data by updating a multicast table of the access network device in a timely manner.

In a possible implementation, a mapping relationship included in the second multicast table is the mapping relationship between the identifier of the target terminal device and the identifier of the target multicast group. If the target access network device is an access network device accessed by the source terminal device, and the source terminal device leaves the target multicast group, after the target access network device receives the second multicast table from the core network control plane device, the target access network device receives a second request from the core network control plane device. The target access network device deletes, based on the second request, a mapping relationship between the identifier of the source terminal device and the identifier of the target multicast group from the second multicast table. In this embodiment of the present invention, after the source terminal device leaves the target multicast group, a multicast table is updated, which can avoid an unnecessary multicast forwarding operation. Because the source terminal device leaves the target multicast group, multicast data of the target multicast group may be no longer received.

In a possible implementation, a mapping relationship included in the second multicast table is the mapping relationship between the identifier of the target terminal device, the identifier of the target local area network, and the identifier of the target multicast group. If the target access network device is an access network device accessed by the source terminal device, and the source terminal device leaves the target multicast group, after the target access network device receives the second multicast table from the core network control plane device, the target access network device receives a second request from the core network control plane device. The target access network device deletes, based on the second request, a mapping relationship between the identifier of the source terminal device, the identifier of the target local area network, and the identifier of the target multicast group from the second multicast table. In this embodiment of the present invention, after the source terminal device leaves the target multicast group, a multicast table is updated, which can avoid an unnecessary multicast forwarding operation. Because the source terminal device leaves the target multicast group, multicast data of the target multicast group may be no longer received.

In a possible implementation, a mapping relationship included in the second multicast table is the mapping relationship between the identifier of the target terminal device and the identifier of the target multicast group. That the target access network device sends, based on the second multicast table, the multicast data to the target terminal device corresponding to an identifier of the target local area network and the identifier of the target multicast group in the second multicast table includes the following steps: The target access network device searches the second multicast table based on the identifier that is of the target multicast group and that is carried in the multicast data, to obtain the identifier that is of the target terminal device and that corresponds to the identifier of the target multicast group. Finally, the target access network device sends the multicast data to the target terminal device based on the identifier of the target terminal device.

In a possible implementation, a mapping relationship included in the second multicast table is the mapping relationship between the identifier of the target terminal device, the identifier of the target local area network, and the identifier of the target multicast group, and the second multicast table further includes the mapping relationship between the identifier of the target terminal device and the identifier of the target multicast group. That the target access network device sends, based on the second multicast table, the multicast data to the target terminal device corresponding to an identifier of the target local area network and the identifier of the target multicast group in the second multicast table includes the following steps: The target access network device searches the second multicast table based on the identifier that is of the source terminal device and that is carried in the multicast data, to obtain the identifier of the local area network. Then the target access network device searches the second multicast table based on the identifier of the target local area network and the identifier that is of the target multicast group and that is carried in the multicast data, to obtain the identifier that is of the target terminal device and that corresponds to the identifier of the target local area network and the identifier of the target multicast group. Finally, the target access network device sends the multicast data to the target terminal device based on the identifier of the target terminal device.

In a possible implementation, a mapping relationship included in the second multicast table is the mapping relationship between the identifier of the target terminal device, the identifier of the target local area network, and the identifier of the target multicast group, and the multicast data received by the target access network device from the core network user plane device carries the identifier of the target local area network. That the target access network device sends, based on the second multicast table, the multicast data to the target terminal device corresponding to an identifier of the target local area network and the identifier of the target multicast group in the second multicast table includes the following steps: The target access network device searches the second multicast table based on the identifier of the target local area network and the identifier of the target multicast group that are carried in the multicast data, to obtain the identifier that is of the target terminal device and that corresponds to the identifier of the target local area network and the identifier of the target multicast group. Finally, the target access network device sends the multicast data to the target terminal device based on the identifier of the target terminal device.

In a possible implementation, the identifier of the source terminal device may be an IMSI, an IMEI, or a TEID of the source terminal device. The identifier of the source terminal device may further be a session identity corresponding to a service of the source terminal device or a flow identity corresponding to a service of the source terminal device. An identifier of a multicast group may be an IP address of the multicast group.

According to a fourth aspect, an embodiment of the present invention provides a core network control plane device. The core network control plane device includes a module or unit configured to execute the multicast data transmission method provided in the first aspect or any possible implementation of the first aspect. Therefore, beneficial effects of the multicast data transmission method provided in the first aspect can also be implemented.

According to a fifth aspect, an embodiment of the present invention provides a core network user plane device. The core network user plane device includes a module or unit configured to execute the multicast data transmission method provided in the second aspect or any possible implementation of the second aspect. Therefore, beneficial effects of the multicast data transmission method provided in the second aspect can also be implemented.

According to a sixth aspect, an embodiment of the present invention provides an access network device. The access network device includes a module or unit configured to execute the multicast data transmission method provided in the third aspect or any possible implementation of the third aspect. Therefore, beneficial effects of the multicast data transmission method provided in the third aspect can also be implemented.

According to a seventh aspect, an embodiment of the present invention provides a core network control plane device including a processor, a transceiver, and a memory, where the processor is configured to invoke program code that is used for multicast data transmission and that is stored in the memory, to perform the multicast data transmission method provided in the first aspect or any possible implementation of the first aspect.

According to an eighth aspect, an embodiment of the present invention provides a core network user plane device including a processor, a transceiver, and a memory, where the processor is configured to invoke program code that is used for multicast data transmission and that is stored in the memory, to perform the multicast data transmission method provided in the second aspect or any possible implementation of the second aspect.

According to a ninth aspect, an embodiment of the present invention provides an access network device including a processor, a transceiver, and a memory, where the processor is configured to invoke program code that is used for multicast data transmission and that is stored in the memory, to perform the multicast data transmission method provided in the third aspect or any possible implementation of the third aspect.

According to a tenth aspect, an embodiment of the present invention further provides a communications system including a core network control plane device, a core network user plane device, and an access network device, where the core network control plane device is the core network control plane device according to the fourth aspect or the seventh aspect, the core network user plane device is the core network user plane device according to the fifth aspect or the eighth aspect, and the access network device is the access network device according to the sixth aspect or the ninth aspect.

According to an eleventh aspect, an embodiment of the present invention provides a chip system including a processor configured to support a data sending device in implementing functions in the foregoing aspects, for example, generating or processing information in the foregoing method. In a possible design, the chip system further includes a memory, where the memory is configured to store a program instruction and data that are necessary for the data sending device. The chip system may include a chip, or may include a chip and another discrete device.

According to a twelfth aspect, an embodiment of the present invention provides a computer storage medium, configured to store a computer software instruction used by the core network control plane device according to the first aspect. When the instruction is executed by the core network control plane device, the core network control plane device is enabled to perform the method according to the first aspect.

According to a thirteenth aspect, an embodiment of the present invention provides another computer storage medium, configured to store a computer software instruction used by the core network user plane device according to the second aspect. When the instruction is executed by the core network user plane device, the core network user plane device is enabled to perform the method according to the second aspect.

According to a fourteenth aspect, an embodiment of the present invention provides another computer storage medium, configured to store a computer software instruction used by the access network device according to the third aspect. When the instruction is executed by the access network device, the access network device is enabled to perform the method according to the third aspect.

According to a fifteenth aspect, an embodiment of the present invention provides a computer program including a computer software instruction. When the instruction is executed by a core network control plane device, the core network control plane device is enabled to perform the method according to the first aspect.

According to a sixteenth aspect, an embodiment of the present invention provides another computer program including a computer software instruction. When the instruction is executed by the core network user plane device, the core network user plane device is enabled to perform the method according to the second aspect.

According to a seventeenth aspect, an embodiment of the present invention provides another computer program including a computer software instruction. When the instruction is executed by the access network device, the access network device is enabled to perform the method according to the third aspect.

In the embodiments of the present invention, after the core network user plane device receives the multicast data, the core network control plane device sends the identifier of the target access network device accessed by a target terminal device that needs to receive the multicast data to the core network user plane device, so that the core network user plane device sends the multicast data to the target access network device. Compared with the prior art in which a core network user plane device sends the multicast data to each terminal device by using a bearer of a target terminal device, in the embodiments of the present invention, the core network user plane device sends multicast data that belongs to a specific multicast group in a local area network to one access network device only once. Therefore, a quantity of times for which replication operations are performed by the core network user plane device on the multicast data are reduced, overheads of the core network user plane device are reduced, and processing efficiency of the core network user plane device is improved.

### BRIEF DESCRIPTION OF DRAWINGS

FIG. 1 is a schematic architectural diagram of a communications system according to an embodiment of the present invention;
FIG. 2 is a schematic logic diagram of a CUPS gateway architecture according to an embodiment of the present invention;
FIG. 3 is a schematic logic diagram of a MEC gateway architecture according to an embodiment of the present invention;
FIG. 4 is a schematic diagram of a multicast data transmission process in the prior art;
FIG. 5 is a schematic flowchart of a multicast data transmission method according to an embodiment of the present invention;
FIG. 6 is a schematic structural diagram of a core network control plane device according to an embodiment of the present invention;
FIG. 7 is a schematic structural diagram of a core network user plane device according to an embodiment of the present invention;
FIG. 8 is a schematic structural diagram of an access network device according to an embodiment of the present invention;
FIG. 9 is a schematic structural diagram of another core network control plane device according to an embodiment of the present invention;
FIG. 10 is a schematic structural diagram of another core network user plane device according to an embodiment of the present invention; and
FIG. 11 is a schematic structural diagram of another access network device according to an embodiment of the present invention.

### DESCRIPTION OF EMBODIMENTS

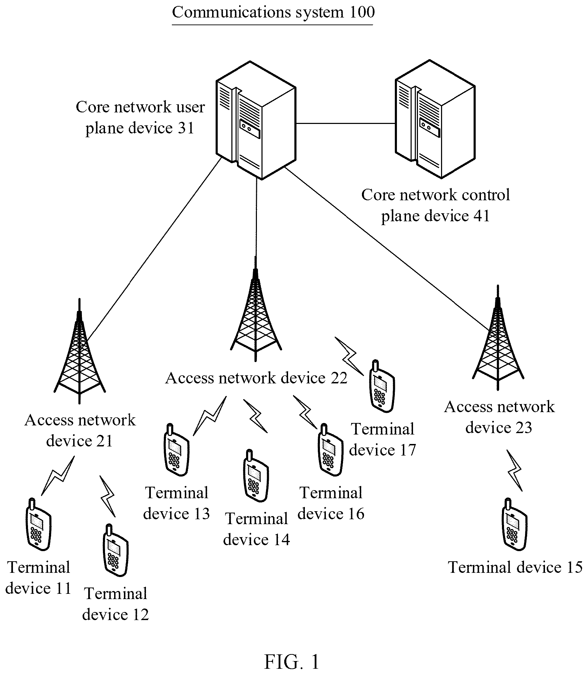

FIG. 1 is a schematic architectural diagram of a communications system 100 according to an embodiment of the present invention. The communications system 100 includes a terminal device, an access network device, a core network user plane device 31, and a core network control plane device 41. This embodiment of the present invention is described by using an example in which the communications system 100 includes seven terminal devices (terminal devices 11, 12, 13, 14, 15, 16, and 17) and three access network devices (access network devices 21, 22, and 23). However, the communications system 100 is not limited thereto. In addition to the foregoing network devices, the communications system 100 may further include another network device. No limitation is set to quantities of terminal devices, access network devices, core network user plane devices, and core network control devices in the communications system 100. In an example in FIG. 1, the access network device 21 provides services for the terminal devices 11 and 12, the access network device 22 provides services for the terminal devices 13, 14, 16, and 17, and the access network device 23 provides a service for the terminal device 15. It should be noted that, although not shown in the figure, communications interfaces also exist between the core network control plane device 41 and the access network devices 21, 22, and 23. Data is transmitted between the core network control plane device and the access network devices through the communications interfaces.

Data can be transmitted between a terminal device and an access network device. The terminal device may also be referred to as user equipment, a mobile station, an access terminal, a subscriber unit, a subscriber station, a mobile station, a remote station, a remote terminal, a mobile device, a user terminal, a terminal, a wireless communications device, a user agent, a user apparatus, or the like. The terminal device may be a handheld terminal device, a notebook computer, a subscriber unit (Subscriber Unit), a cellular phone (Cellular Phone), a smartphone (Smart Phone), a wireless data card, personal digital processing (Personal Digital Assistant, PDA), a handheld device with a wireless communication function, a vehicle-mounted device, a wearable device, a mobile station in a future 5G network, a terminal device in a future evolved public land mobile network (Public Land Mobile Network, PLMN) network, or the like. The terminal device communicates with the access network device by using an air interface technology.

The access network device mainly implements functions on an air interface side, such as radio resource management, quality of service (Quality of Service, QoS) management, and data compression and encryption. The access network device may include various access network devices such as a macro base station, a micro base station (also referred to as a small cell), a relay node, and an access point. In a system using a different radio access technology, a name of an access network device may be different. For example, the access network device is referred to as a next generation NodeB (next-generation Node B, gNB) in a 5G communications system, an evolved NodeB (evolved NodeB, eNB or eNodeB) in a long term evolution (Long Term Evolution, LTE) system, and a NodeB (Node B) in a 3rd generation (3rd Generation, 3G) system, or the like.

The core network user plane device is a user plane network element. The core network user plane device receives a data packet from the terminal device and forwards the data packet.

The core network control plane device is a control plane network element, and may define a processing action performed by the core network user plane device on a data packet. The core network control plane device sends a forwarding rule of a data packet to the core network user plane device. When the data packet reaches the core network user plane device, the core network user plane device performs corresponding processing on the data packet according to the forwarding rule sent by the core network control plane device, to complete forwarding of the data packet. The core network control plane device may store bearer information (including an identifier of the terminal device) of the terminal device, information about a local area network to which the terminal device belongs, information about a multicast group to which the terminal device belongs, and information about a base station to which the terminal device belongs.

This embodiment of the present invention may be applicable to but not limited to the following network architectures: a control and user plane separation (Control and User Plane Separation, CUPS)-based distributed gateway architecture, and a mobile edge computing (Mobile Edge Computing, MEC) architecture.

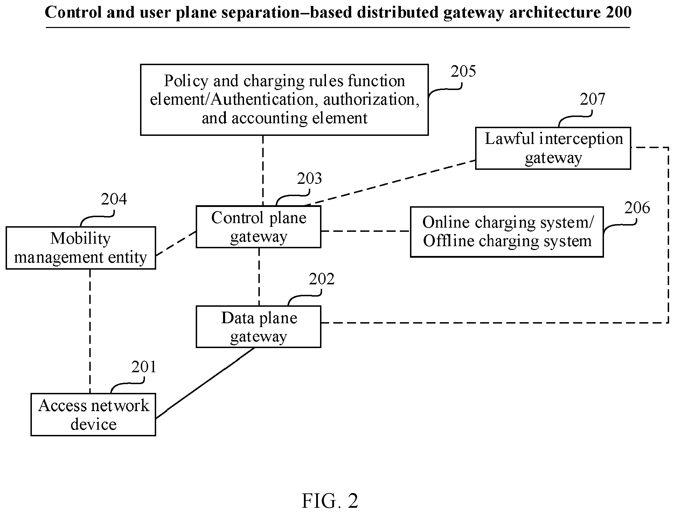

FIG. 2 is a schematic logic diagram of a CUPS gateway architecture according to an embodiment of the present invention. In FIG. 2, a CUPS gateway architecture 200 includes but is not limited to the following network elements: an access network device 201, a data gateway (Data Gateway, DGW) 202, a control plane gateway (Control Gateway, CGW) 203, a mobility management entity (Mobility Management Entity, MME) 204, a policy and charging rules function (Policy and Charging Rules Function, PCRF) element/authentication, authorization, and accounting (Authentication, Authorization, and Accounting, AAA) element 205, an online charging system (Online Charging System, OCS)/offline charging system (Offline Charging System, OCS) 206, and a lawful interception gateway (Lawful Interception Gateway, LIG) 207. In FIG. 2, a solid line "-" denotes a data plane connection, and a dashed line "---·" denotes a control plane connection.

The access network device 201 is a cellular network access device, and is responsible for providing an interface for a terminal device to access a wireless network.

The data gateway 202 is a point at which user plane data converges and is forwarded. The data gateway 202 can route and forward a data packet.

The control plane gateway 203 may store bearer information (including an identifier of the terminal device) of the terminal device, information about a local area network to which the terminal device belongs, information about a multicast group to which the terminal device belongs, and information about a base station to which the terminal device belongs. The control plane gateway may further configure a forwarding rule for the data gateway.

The mobility management entity 204 mainly implements functions such as access control (including security and admission control), mobility management (tracking a location of a terminal device), attachment and detachment, session management, and the like.

The policy and charging rules function element/authentication, authorization, and accounting element 205 is used for user policy implementation, related charging planning, and the like. Whether the element 205 is specifically a policy and charging rules function element or an authentication, authorization, and accounting element is related to a communications system.

The online charging system/offline charging system 206 is configured to perform charging on a service of a user.

The lawful interception gateway 207 is configured to intercept violation information of a user.

For example, for the CUPS architecture, the data gateway 202 may be equivalent to the core network user plane device in the embodiments of the present invention, and the control plane gateway 203 may be equivalent to the core network control plane device in the embodiments of the present invention.

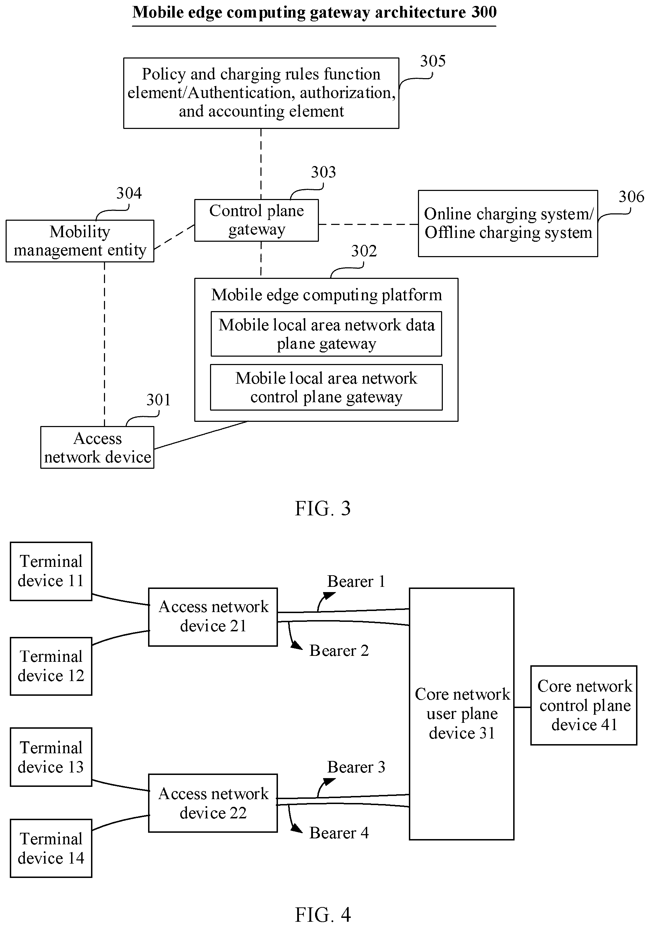

FIG. 3 is a schematic logic diagram of a MEC gateway architecture according to an embodiment of the present invention. In FIG. 3, a MEC gateway architecture 300 includes an access network device 301, a mobile edge computing platform 302, a control plane gateway 303, a mobility management entity 304, a policy and charging rules function element/authentication, authorization, and accounting element 305, and an online charging system/offline charging system 306. The mobile edge computing platform 302 includes a mobile local area network control plane gateway and a mobile local area network data gateway. In FIG. 3, a solid line " " denotes a data plane connection, and a dashed line " ---·" denotes a control plane connection.

The control plane gateway 303 in FIG. 3 may be understood as a control plane gateway of an operator. The control plane gateway 303 may store bearer information (including identifiers of terminal devices) of all the terminal devices that belong to the operator, information about a local area network to which the terminal devices belong, information about a multicast group to which the terminal devices belong, and information about a base station to which the terminal devices belong.

The mobile local area network control plane gateway is a control plane gateway on the mobile edge computing platform 302. The mobile local area network control plane gateway may obtain, from the control plane gateway 303, bearer information of a terminal device that belongs to the mobile local area network, information about a local area network to which the terminal device belongs, information about a multicast group to which the terminal device belongs, and information about a base station to which the terminal device belongs.

The mobile local area network data gateway is a point at which user plane data converges and is forwarded and that is on the mobile edge computing platform 302. The mobile local area network data gateway can route and forward a data packet.

For functions of other network elements in FIG. 3, refer to the descriptions in FIG. 2. Details are not described herein again.

For example, for the MEC architecture, the mobile local area network data gateway in FIG. 3 may be equivalent to the core network user plane device in the embodiments of the present invention, and the mobile local area network control plane gateway or the control plane gateway in FIG. 3 may be equivalent to the core network control plane device in the embodiments of the present invention.

This embodiment of the present invention may be applied to a scenario in which a terminal device sends multicast data to another terminal device in a same multicast group in a same local area network. In addition, this embodiment of the present invention may be further applied to another application scenario. This is not limited herein. For example, in FIG. 1, the terminal devices 11, 12, 13, and 14 belong to a multicast group 1 in a local area network 1. The terminal devices 11 and 13 further belong to a multicast group 2 in the local area network 1. The terminal devices 15, 16 and 17 belong to a multicast group 1 in a local area network 2. It can be learned that the access network device 22 is covered by both the local area network 1 and the local area network 2. For details, refer to Table 1 below. For example, identifiers of the terminal devices 11, 12, 13, 14, 15, 16, and 17 are UE1, UE2, UE3, UE4, UE5, UE6, and UE7 respectively. Identifiers of local area networks 1 and 2 are LAN1 and LAN2 respectively. Identifiers of multicast groups 1 and 2 are 224.0.2.1 and 224.0.2.4 respectively. Identifiers of the access network devices 21, 22, and 23 are gNB1, gNB2, and gNB3 respectively.

**Table 1**

| Identifier of the terminal device | Identifier of the local area network | Identifier of the multicast group | Identifier of the access network device |
|---|---|---|---|
| UE1 | LAN1 | 224.0.2.1 | gNB1 |
| UE2 | LAN1 | 224.0.2.1 | gNB1 |
| UE3 | LAN1 | 224.0.2.1 | gNB2 |
| UE4 | LAN1 | 224.0.2.1 | gNB2 |
| UE1 | LAN1 | 224.0.2.4 | gNB1 |
| UE3 | LAN1 | 224.0.2.4 | gNB2 |
| UE5 | LAN2 | 224.0.2.1 | gNB3 |
| UE6 | LAN2 | 224.0.2.1 | gNB2 |
| UE7 | LAN2 | 224.0.2.1 | gNB2 |

It should be noted that one terminal device may join one local area network, and the terminal device may join one or more multicast groups in the local area network. For example, the terminal device 11 joins the local area network 1, and the terminal device 11 joins the multicast group 1 and the multicast group 2 in the local area network 1. Identifiers of multicast groups in different local area networks may be the same or different. For example, an identifier of a multicast group in the local area network 1 is 224.0.2.1, and an identifier of a multicast group in the local area network 2 is also 224.0.2.1.

First, an inventive concept of this embodiment of the present invention is described. FIG. 4 is a schematic diagram of a multicast data transmission process in the prior art. Herein, the terminal devices 11, 12, 13, and 14, the access network devices 21 and 22, the core network user plane device 31, and the core network control plane device 41 in FIG. 1 are used as an example for description. A bearer established between the core network user plane device 31 and the terminal device 11 is a bearer 1, and the bearer 1 is specially used to transmit data between the core network user plane device and the terminal device 11. Likewise, a bearer established between the core network user plane device 31 and the terminal device 12 is a bearer 2, a bearer established between the core network user plane device 31 and the terminal device 13 is a bearer 3, and a bearer established between the core network user plane device 31 and the terminal device 14 is a bearer 4. After receiving multicast data from a source terminal device UE1, the core network user plane device reports the multicast data to the core network control plane device. The core network control plane device searches a multicast table stored in the core network control plane device, and determines an identifier of a terminal device that needs to receive the multicast data. Identifiers of the terminal devices include UE2, UE3, and UE4. The core network control plane device sends the identifiers of the terminal devices to the core network user plane device. The core network user plane device searches an identifier that is of a bearer and that corresponds to an identifier of each of the terminal devices based on a bearer table stored in the core network user plane device, performs replication and GTP encapsulation on the multicast data, and then sends the multicast data by using a downlink unicast bearer of each terminal device at a receive end. For example, the core network user plane device sends the multicast data to the terminal device 12 by using the bearer 2, sends the multicast data to the terminal device 13 by using the bearer 3, and sends the multicast data to the terminal device 14 by using the bearer 4. Different terminal devices correspond to different downlink unicast bearers. Therefore, even if a plurality of terminal devices at the receive end all access a same access network device, the core network user plane device sends the multicast data to the access network device for a plurality of times for the plurality of terminal devices at the receive end. Therefore, a quantity of times for which the core network user plane device sends the multicast data is equal to a quantity of terminal devices at the receive end. For example, in FIG. 4, the core network user plane device sends the multicast data to the gNB 2 twice.

However, in this embodiment of this application, to reduce a quantity of times for which replication and encapsulation operations are performed by the core network user plane device on the multicast data, the core network user plane device sends multicast data that belongs to a specific multicast group in a local area network to one access network device only once. Therefore, a quantity of times for which replication operations are performed by the core network user plane device on the multicast data are reduced, overheads of the core network user plane device are reduced, and processing efficiency of the core network user plane device is improved. Therefore, according to the multicast data transmission method in this application, the core network user plane device only needs to send the multicast data to the gNB 2 once. Therefore, a quantity of times for which replication operations are performed by the core network user plane device on the multicast data are reduced, overheads of the core network user plane device are reduced, and processing efficiency of the core network user plane device is improved.

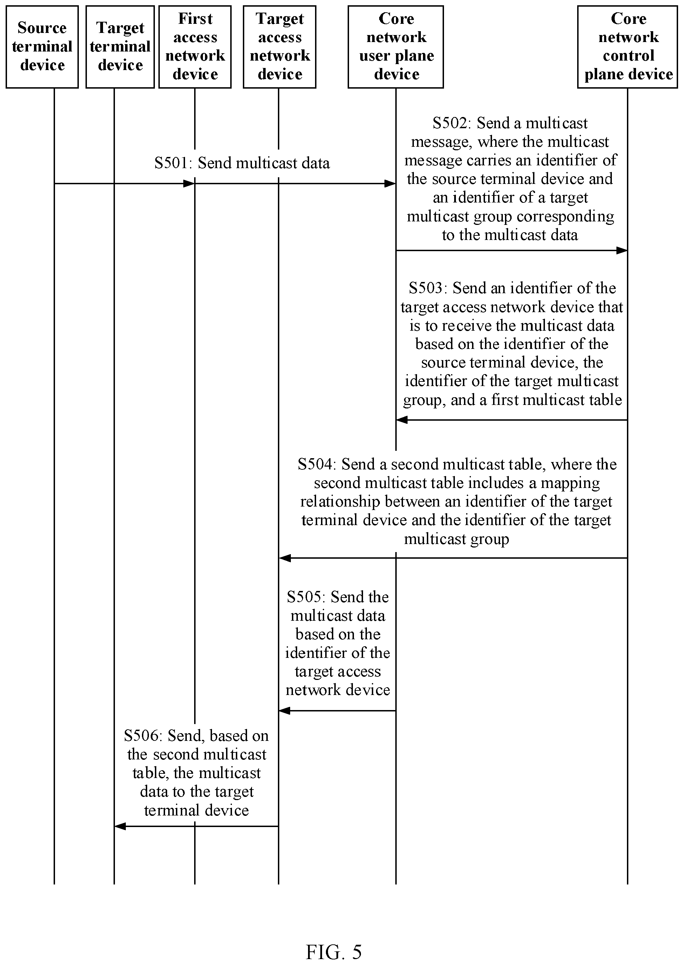

Based on the network architecture shown in FIG. 1, a multicast data transmission method according to an embodiment of the present invention is described with reference to FIG. 5. As shown in FIG. 5, the multicast data transmission method includes but is not limited to the following steps S501 to S506.

S501: A source terminal device sends multicast data to a core network user plane device, and the core network user plane device receives the multicast data from the source terminal device.

The source terminal device is a device that sends the multicast data. The source terminal device sends, the multicast data to other terminal devices that belong to a same multicast group in a same local area network as the source terminal device through the core network user plane device. In this embodiment of the present invention, the other terminal devices are collectively referred to as target terminal devices. For example, the multicast data carries a source address and a destination address. Herein, the source address may be an identifier of the source terminal device. For example, the identifier of the source terminal device may be an IMSI, an IMEI, or a TEID of the source terminal device. Alternatively, the identifier of the source terminal device may further be a session identity corresponding to a service of the source terminal device or a flow identity corresponding to a service of the source terminal device. The destination address may be an identifier of a multicast group corresponding to the multicast data. For example, an identifier of a multicast group may be an IP address of the multicast group.

To be specific, the multicast group corresponding to the multicast data is a specific multicast group to which the source terminal device belongs. In this embodiment of the present invention, for ease of description, the multicast group corresponding to the multicast data is named as a target multicast group. For example, referring to Table 1, the UE 1 belongs to both the multicast group 1 and the multicast group 2 in the local area network 1. If the UE 1 sends a piece of multicast data, and a destination address of the multicast data is set to 224.0.2.1, it indicates that the multicast data currently sent by the UE 1 is data that belongs to the multicast group 1. Only other terminal devices that belong to the multicast group 1 in the local area network 1 can receive the multicast data. Herein, the other terminal devices that belong to the multicast group 1 in the local area network 1 include the UE 1, the UE 2, the UE 3, and the UE 4. Therefore, target terminal devices include the UE 1, the UE 2, the UE 3, and the UE 4, or target terminal devices include the UE 2, the UE 3, and the UE 4.

It should be noted that, the source terminal device may first send the multicast data to an access network device accessed by the source terminal device. In this embodiment of the present invention, an example in which the source terminal device accesses the first access network device is used for description. Therefore, the source terminal device sends the multicast data to the first access network device. Then, the first access network device sends the multicast data to the core network user plane device. The core network user plane device receives the multicast data from the first access network device.

S502: The core network user plane device sends a multicast message to a core network control plane device, where the multicast message carries the identifier of the source terminal device and the identifier of the target multicast group corresponding to the multicast data.

The multicast message may indicate that the core network user plane device receives the multicast data. The core network user plane device receives data sent by the source terminal device from the access network device. The data may be multicast data, or may be other point-to-point data, broadcast data, or the like. The core network user plane device identifies the received data, to determine whether the received data is multicast data. For example, the core network user plane device determines whether a destination address is a multicast address by identifying the destination address of the received data. If the destination address is a multicast address, the core network user plane device may determine that the received data is multicast data. When determining that the received data is multicast data, the core network user plane device sends a multicast message to the core network control plane device, to request the core network control plane device to deliver a forwarding rule.

In this embodiment of the present invention, for ease of description, a local area network to which the source terminal device belongs is named as a target local area network. An example in which it is assumed that the source terminal device is the terminal device 11 that joins the multicast group 1 in the local area network 1 is used for description. In this case, an identifier of the source terminal device is UE1, an identifier of the target local area network is LAN1, and an identifier of the target multicast group has an IP address of 224.0.2.1.

S503: The core network control plane device receives the multicast message from the core network user plane device, and sends an identifier of a target access network device that is to receive the multicast data to the core network user plane device based on the identifier of the source terminal device, the identifier of the target multicast group, and a first multicast table.

In this embodiment of the present invention, the core network control plane device may determine the target access network device based on the identifier of the source terminal device, the identifier of the target multicast group, and the first multicast table. The target access network device is an access network device accessed by a terminal device that belongs to the target multicast group in the target local area network. The first multicast table includes identifiers of terminal devices that join a local area network, an identifier of the local area network to which the terminal devices belong, an identifier of a multicast group to which the terminal devices belong, and an identifier of an access network device accessed by the terminal devices. The terminal devices include the source terminal device.

For example, the core network user plane device establishes and maintains the first multicast table, and updates the first multicast table in real time. For example, when a specific terminal device joins a specific local area network, the core network control plane device stores a mapping relationship between an identifier of the terminal device and an identifier of the local area network. Alternatively, when a specific terminal device joins a specific multicast group, the core network control plane device stores a mapping relationship between an identifier of the terminal device and an identifier of the multicast group. Alternatively, when a specific terminal device accesses a specific access network device, the core network control plane device stores a mapping relationship between an identifier of the terminal device and an identifier of the access network device. For example, a format of the first multicast table may be shown in Table 1.

For example, the core network control plane device searches the first multicast table based on the identifier of the target terminal device, to obtain the identifier that is of the target local area network and that corresponds to the identifier of the target terminal device. Then, the core network control plane device searches the first multicast table based on the identifier of the target local area network and the identifier of the target multicast group, to obtain an identifier that is of the target terminal device and that corresponds to the identifier of the target local area network and the identifier of the target multicast group. Finally, the core network control plane device searches the first multicast table based on the identifier of the target terminal device, to obtain the identifier that is of the target access network device and that corresponds to the identifier of the target terminal device. The core network control plane device sends the identifier of the target access network device to the core network user plane device. For example, the core network control plane device may send a forwarding rule to the core network user plane device, where the forwarding rule carries the identifier of the target access network device.

For example, if the source terminal device is the UE 1, and an IP address that is of a target multicast group and that is carried in multicast data sent by the UE1 is 224.0.2.1, the core network control plane device searches the first multicast table in Table 1 based on the parameter UE1, and learns that an identifier that is of a local area network and that corresponds to UE1 is LAN1. Then, the core network control plane device searches the first multicast table based on the two parameters, namely, LAN1 and 224.0.2.1, and learns that identifiers of corresponding terminal devices include UE1, UE2, UE3, and UE4. Because the UE 1 and the UE 2 both access the access network device gNB 1, and the UE3 and the UE4 both access the access network device gNB 2, target access network devices include the gNB 1 and the gNB 2.

S504: The core network control plane device sends a second multicast table to the target access network device, and the target access network device receives the second multicast table from the core network control plane device, where the second multicast table includes a mapping relationship between the identifier of the target terminal device and the identifier of the target multicast group.

The target terminal device is a terminal device that belongs to the target multicast group in the target local area network and that accesses the target access network device. If the core network control plane device learns that all terminal devices that join a specific target access network device belong to only one local area network, the second multicast table sent by the core network control plane device to the target access network device may include the mapping relationship between the identifier of the target terminal device and the identifier of the target multicast group. If the core network control plane device learns that all terminal devices that join a specific target access network device belong to at least two local area networks, the second multicast table sent by the core network control plane device to the target access network device may include a mapping relationship between the identifier of the target terminal device, the identifier of the target local area network, and the identifier of the target multicast group.

For example, with reference to Table 1, target access network devices includes the gNB 1 and the gNB 2. Terminal devices that belong to the multicast group 1 in the local area network 1 and that access the gNB 1 include the UE 1 and the UE 2. Additionally, the UE 1 and the UE 2 that are connected to the gNB 1 belong to only one local area network. Therefore, reference may be made to Table 2 below for content of the second multicast table sent by the core network control plane device to the gNB 1. To be specific, the content of the second multicast table includes only a mapping relationship between identifiers (UE1 and UE2) of target terminal devices and the identifier (224.0.2.1) of the target multicast group, and does not include the identifier (LAN1) of the target local area network. Certainly, reference may also be made to Table 3 below for content of the second multicast table sent by the core network control plane device to the gNB 1. To be specific, the content of the second multicast table includes a mapping relationship between the identifier of the target terminal device, the identifier of the target local area network, and the identifier of the target multicast group. Similarly, terminal devices that belong to the multicast group 1 in the local area network 1 and that access the gNB 2 include the UE 3 and the UE 4. Additionally, the UE 3, the UE 4, the UE 6, and the UE 7 that are connected to the gNB 2 belong to two local area networks. Therefore, reference may be made to Table 4 below for content of the second multicast table sent by the core network control plane device to the gNB 2. To be specific, the second multicast table includes a mapping relationship between identifiers (UE3 and UE4) of target terminal devices, the identifier (LAN1) of the target local area network, and the identifier (224.0.2.1) of the target multicast group.

**Table 2**

| Identifier of the terminal device | Identifier of the multicast group |
|---|---|
| UE1 | 224.0.2.1 |
| UE2 | 224.0.2.1 |

**Table 3**

| Identifier of the terminal device | Identifier of the local area network | Identifier of the multicast group |
|---|---|---|
| UE1 | LAN1 | 224.0.2.1 |
| UE2 | LAN1 | 224.0.2.1 |

**Table 4**

| Identifier of the terminal device | Identifier of the local area network | Identifier of the multicast group |
|---|---|---|
| UE3 | LAN1 | 224.0.2.1 |
| UE4 | LAN1 | 224.0.2.1 |

Subsequently, if the core network user plane device receives multicast data that belongs to the multicast group 2 (224.0.2.4) from the UE 1, the core network control plane device sends a mapping relationship between UE1 and 224.0.2.4 to the gNB 1. Alternatively, the core network control plane device sends a mapping relationship between UE1, LAN1, and 224.0.2.4 to the gNB 1, and the gNB 1 updates the second multicast table stored in the gNB 1. For content of an updated second multicast table of the gNB1, refer to Table 5 or Table 6 below. In addition, because the UE 3 and the UE 1 belong to the same local area network LAN 1 and the same multicast group 2 (224.0.2.4), the core network control plane device sends a mapping relationship between UE3, LAN1, and 224.0.2.4 to the gNB 2. For content of an updated second multicast table of the gNB 2, refer to Table 7 below.

**Table 5**

| Identifier of the terminal device | Identifier of the multicast group |
|---|---|
| UE1 | 224.0.2.1 |
| UE2 | 224.0.2.1 |
| UE1 | 224.0.2.4 |

**Table 6**

| Identifier of the terminal device | Identifier of the local area network | Identifier of the multicast group |
|---|---|---|
| UE1 | LAN1 | 224.0.2.1 |
| UE2 | LAN1 | 224.0.2.1 |
| UE1 | LAN1 | 224.0.2.4 |

**Table 7**

| Identifier of the terminal device | Identifier of the local area network | Identifier of the multicast group |
|---|---|---|
| UE3 | LAN1 | 224.0.2.1 |
| UE4 | LAN1 | 224.0.2.1 |
| UE3 | LAN1 | 224.0.2.4 |

Likewise, if the core network user plane device receives multicast data that belongs to the multicast group 1 (224.0.2.1) from the UE 6, because the UE 6 and the UE 7 belong to the same local area network LAN 2 and the same multicast group 1 (224.0.2.1), the core network control plane device sends a mapping relationship between UE6, LAN2, and 224.0.2.1 and a mapping relationship between UE7, LAN2, and 224.0.2.1 to the gNB 2. Then the gNB 2 updates the second multicast table stored in the gNB 2. For content of an updated second multicast table of the gNB 2, refer to Table 8 below.

**Table 8**

| Identifier of the terminal device | Identifier of the local area network | Identifier of the multicast group |
|---|---|---|
| UE3 | LAN1 | 224.0.2.1 |
| UE4 | LAN1 | 224.0.2.1 |
| UE3 | LAN1 | 224.0.2.4 |
| UE6 | LAN2 | 224.0.2.1 |
| UE7 | LAN2 | 224.0.2.1 |

It can be learned from Table 2 to Table 8 that target terminal devices recorded in a second multicast table stored in a specific target access network device may belong to a same local area network, or may belong to a plurality of local area networks. This is not specifically limited in this embodiment of the present invention.

In addition, the core network control plane device identifies a specific source terminal device from which the multicast data received by the core network user plane device comes, and learns, by searching the first multicast table, a specific local area network, namely, a target local area network, to which the source terminal device belongs. Therefore, the core network control plane device may send a mapping relationship between the identifier of the source terminal device and the identifier of the target local area network to each target access network device. Then, the target access network device receives, from the core network user plane device, the multicast data that is from the source terminal device. The multicast data carries the identifier of the source terminal device and the identifier of the target multicast group. In this case, the target access network device may determine the identifier of the target local area network based on the identifier that is of the source terminal device and that is carried in the multicast data and the obtained mapping relationship between the identifier of the source terminal device and the identifier of the target local area network. Then, the target access network device identifies a specific multicast group that is in a specific local area network and that corresponds to the multicast data based on the second multicast table, the identifier of the target local area network, and the identifier that is of the target multicast group and that is carried in the multicast data.

For example, the source terminal device is the UE 1, the target local area network is the LAN 1, and the target multicast group has an IP address of 224.0.2.1. In this case, for a mapping relationship that is between the identifier of the source terminal device and the identifier of the target local area network and that is received by the gNB 1 and the gNB 2, refer to Table 9 below.

**Table 9**

| Identifier of the source terminal device | Identifier of the target local area network |
|---|---|
| UE1 | LAN 1 |

Referring to the example shown in Table 6, the core network user plane device receives multicast data that belongs to the multicast group 2 (224.0.2.4) from the UE 1. Because a source terminal device sending the multicast data is the UE 1 and does not change, the core network control plane device may resend a mapping relationship between the identifier UE1 of the source terminal device and the identifier LAN1 of the target local area network to the gNB 1 and the gNB 2, so that the gNB 1 and the gNB 2 update an identifier of the source terminal device and an identifier of the target local area network that are stored in each of the gNB 1 and the gNB 2. Certainly, the core network control plane device may alternatively not resend a mapping relationship between UE1 and LAN1 to the gNB 1 and the gNB 2, and the identifier of the source terminal device and the identifier of the target local area network that are stored in each of the gNB 1 and the gNB 2 are not updated.

Likewise, referring to the example shown in Table 8, the core network user plane device receives multicast data that belongs to the multicast group 1 (224.0.2.1) from the UE 6. Because a source terminal device that sends the multicast data is the UE 6 instead of the UE 1, the core network control plane device may send a mapping relationship between UE6 and LAN2 to the gNB 2, so that the gNB 2 updates the identifier that is of the source terminal device and that is stored in the gNB 2 from UE1 to UE6, and updates the identifier of the target local area network from LAN1 to LAN2. For a mapping relationship between an identifier of the source terminal device and an identifier of the target local area network that are obtained after the gNB2 performs updating, refer to Table 10 below.

**Table 10**

| Identifier of the source terminal device | Identifier of the target local area network |
|---|---|
| UE6 | LAN2 |

It can be learned from Table 9 to Table 10 that, when the core network user plane device receives multicast data from a new source terminal device, the core network control plane device sends, to a target access network device, a mapping relationship between an identifier of a target terminal device that needs to receive the multicast data, an identifier of a target local area network to which the new source terminal device belongs, and an identifier of a target multicast group to which the multicast data belongs. The target access network device adds the newly received mapping relationship between the identifier of the target terminal device, the identifier of the target local area network, and the identifier of the target multicast group to the second multicast table previously stored. In addition, when the core network user plane device receives multicast data from a new source terminal device, the core network control plane device may alternatively send, to a target access network device, an identifier of a new source terminal device and an identifier of a target local area network to which the source terminal device belongs, so that the target access network device updates an identifier of a source terminal device and an identifier of a target local area network that are stored in the target access network device. The identifier of the source terminal device and the identifier of the target local area network are updated in real time, so as to ensure that the target access network device can correctly determine, by searching the second multicast table, a specific terminal device to which the multicast data needs to be sent when receiving, from the core network user plane device, the multicast data that is from the source terminal device.

Alternatively, the core network control plane device may not send a mapping relationship between the identifier of the source terminal device and the identifier of the target local area network to each target access network device. Instead, the core network control plane device sends an identifier of a target local area network to the core network user plane device after learning of a specific local area network, namely, the target local area network, to which a source terminal device belongs. Herein, the core network control plane device may send the identifier of the target local area network and an identifier of a target access network device together or separately to the core network user plane device. This is not specifically limited in this embodiment of the present invention. The core network user plane device receives the identifier of the target local area network, adds the identifier of the target local area network to the multicast data sent by the source terminal device, and sends, to the target access network device based on the identifier of the target access network device, multicast data to which the identifier of the target local area network is added. For example, the core network user plane device may add the identifier of the target local area network to an IP header of the multicast data. For example, the core network user plane device may add the identifier of the target local area network to a reserved field in the IP header, or to a protocol field or a service type field in the IP header. Herein, 8 bits in the IP header are used to indicate a protocol type of the multicast data. In this embodiment of the present invention, a multicast tunnel is pre-established between the core network user plane device and the target access network device, and the core network user plane device transmits the multicast data to the target access network device through the multicast tunnel. In this way, the target access network device may identify the multicast data as data of a multicast type based on the multicast tunnel for transmitting the multicast data. Therefore, an 8-bit field may be used to carry the identifier of the target local area network.

In a first implementation, the core network control plane device may directly send the second multicast table to the target access network device through an interface between the core network control plane device and the target access network device. In a second implementation, the core network control plane device may alternatively send the second multicast table to the core network user plane device, and the core network user plane device sends the second multicast table to the core network user plane device. The two implementations are described in step S505 in detail.

S505: The core network user plane device receives, from the core network control plane device, the identifier of the target access network device that is to receive the multicast data, and sends the multicast data to the target access network device based on the identifier of the target access network device; and the target access network device receives the multicast data from the core network user plane device.

For example, if target access network devices include the gNB 1 and the gNB 2, the core network user plane device sends the multicast data sent by the source terminal device to each of the gNB 1 and the gNB 2. Herein, the core network user plane device may send the multicast data to each of the gNB 1 and the gNB 2 in a time sequence, or the core network user plane device may send the multicast data to the gNB 1 and the gNB 2 simultaneously.

For the first implementation in step S504, after determining the target access network device, the core network control plane device may first send the identifier of the target access network device to the core network user plane device, and then send the second multicast table to the target access network device. Alternatively, after determining the target access network device, the core network control plane device may first send the second multicast table to the target access network device, and then send the identifier of the target access network device to the core network user plane device. Alternatively, after determining the target access network device, the core network control plane device may send the identifier of the target access network device to the core network user plane device, and simultaneously send the second multicast table to the target access network device. That is, a sequence in which steps S503 and S504 are performed is not limited in this embodiment of the present invention.

For the second implementation, after determining the target access network device, the core network control plane device sends the identifier of the target access network device and the second multicast table to the core network user plane device, and the core network user plane device sends the multicast data sent by the source terminal device and the second multicast table to the target access network device based on the identifier of the target access network device. The multicast data and the second multicast table may be sent by using a same message, or may be sent by using different messages.

Optionally, if the core network control plane device sends the identifier of the target local area network and the identifier of the target access network device together to the core network user plane device, the core network user plane device receives the identifier of the target local area network and the identifier of the target access network device, adds the identifier of the target local area network to the multicast data sent by the source terminal device, and sends, to the target access network device based on the identifier of the target access network device, multicast data to which the identifier of the target local area network is added.

Optionally, before the core network control plane device receives the multicast message from the core network user plane device, the core network control plane device may further send a request message to the core network user plane device, where the request message is used to request the core network user plane device to establish a multicast tunnel with the target access network device, and the multicast tunnel is used to transmit the multicast data. After the core network user plane device establishes the multicast tunnel with the access network device, the multicast tunnel can be used to transmit the multicast data. For example, an existing S 1 interface may be multiplexed by the core network user plane device to establish a multicast tunnel with the access network device. Alternatively, a new interface may be customized. This is not specifically limited in this embodiment of the present invention.

S506: The target access network device sends, based on the second multicast table, the multicast data sent by the source terminal device to the target terminal device corresponding to the identifier of the target multicast group.

After receiving the second multicast table, the target access network device may store the second multicast table. After receiving, from the core network user plane device, the multicast data that is from the source terminal device, the target access network device sends, based on the stored second multicast table, the multicast data to the target terminal device corresponding to the identifier of the target multicast group. In this embodiment of the present invention, an access network device may multicast distribution, which can reduce load of the core network user plane device, compared with the prior art in which a core network user plane device distributes multicast data to each terminal device.

For example, the second multicast table includes the mapping relationship between the identifier of the target terminal device and the identifier of the target multicast group. Therefore, the target access network device searches the second multicast table based on the identifier that is of the target multicast group and that is carried in the multicast data, to obtain the identifier that is of the target terminal device and that corresponds to the identifier of the target multicast group. Then, the target access network device sends the multicast data to the target terminal device based on the identifier of the target terminal device. Herein, because the source terminal device also belongs to the target multicast group in the target local area network, to prevent the source terminal device from receiving the multicast data sent by the source terminal device, the first access network device accessed by the source terminal device may not send the multicast data to the source terminal device. Therefore, when the target access network device sends the multicast data to the target terminal device, the source terminal device needs to be screened out. For example, the target access network device sends the multicast data to another terminal device other than the source terminal device based on the identifier of the source terminal device and the identifier that is of the target terminal device and that corresponds to the identifier of the target multicast group.

For example, after receiving, from the core network user plane device, multicast data that is from the UE 1, the gNB 1 searches Table 5 based on a parameter, namely, a destination address (which is an identifier, for example, 224.0.2.1, of the target multicast group) carried in the multicast data, and learns that corresponding terminal devices include the UE 1 and the UE 2. Then, the gNB 1 may send the multicast data to the UE 1 and the UE 2 respectively based on identifiers of the UE 1 and the UE 2. Alternatively, the gNB 1 sends the multicast data only to the UE 2 based on identifiers of the UE 1 and the UE 2 and the identifier of the source terminal device, and no longer sends the multicast data to the UE 1.

For another example, the second multicast table includes the mapping relationship between the identifier of the target terminal device, the identifier of the target local area network, and the identifier of the target multicast group. In addition, the target access network device further stores the mapping relationship between the identifier of the source terminal device and the identifier of the target local area network to which the source terminal device belongs. In this case, the target access network device determines the identifier of the target local area network based on the identifier that is of the source terminal device and that is carried in the multicast data and the stored mapping relationship between the identifier of the source terminal device and the identifier of the target local area network. Then, the target access network device searches the second multicast table based on the identifier of the target local area network and the identifier that is of the target multicast group and that is carried in the multicast data, to obtain the identifier that is of the target terminal device and that corresponds to the identifier of the target local area network and the identifier of the target multicast group. Finally, the target access network device sends the multicast data to the target terminal device based on the identifier of the target terminal device. Herein, because the source terminal device also belongs to the target multicast group in the target local area network, to prevent the source terminal device from receiving the multicast data sent by the source terminal device, the first access network device accessed by the source terminal device may not send the multicast data to the source terminal device. Therefore, when the target access network device sends the multicast data to the target terminal device, the source terminal device needs to be screened out. For example, the target access network device sends the multicast data to another terminal device other than the source terminal device based on the identifier of the source terminal device and the identifier that is of the target terminal device and that corresponds to the identifier of the target local area network and the identifier of the target multicast group.

For example, for Table 8, after receiving, from the core network user plane device, the multicast data that is from the UE 6, the gNB 2 learns that the multicast data is data from the UE 6 based on a source address carried in the multicast data. Then, the gNB 2 searches Table 9 for the mapping relationship between the identifier of the source terminal device and the identifier of the target local area network, and learns that a target local area network to which the UE 6 belongs is the LAN 2. In this case, the gNB 2 searches Table 8 based on two parameters, namely, LAN2 and a destination address 224.0.2.1 that is carried in the multicast data, and learns that terminal devices that belong to the LAN2 and 224.0.2.1 include the UE 6 and the UE 7. Then, the gNB 2 may send the multicast data to each of the UE 6 and the UE 7 based on identifiers of the UE 6 and the UE 7. Alternatively, the gNB 2 sends the multicast data only to the UE 7 based on identifiers of the UE 6 and the UE 7 and the identifier UE6 of the source terminal device, and no longer sends the multicast data to the UE 6.

In this embodiment of the present invention, after the core network user plane device receives the multicast data, the core network control plane device sends the identifier of the target access network device accessed by a target terminal device that needs to receive the multicast data to the core network user plane device, and the core network user plane device sends the multicast data to the target access network device. In this case, the core network user plane device sends multicast data that belongs to a specific multicast group in a local area network to one access network device only once. Therefore, a quantity of times for which replication operations are performed by the core network user plane device on the multicast data are reduced, overheads of the core network user plane device are reduced, and processing efficiency of the core network user plane device is improved.

Optionally, after the core network control plane device sends the second multicast table to the target access network device, and the source terminal device is handed over from the first access network device to a second access network device, the core network control plane device further updates the identifier that is of the source terminal device and that is recorded in the first multicast table, and updates the identifier that is of the first access network device accessed by the source terminal device and that is recorded in the first multicast table to an identifier of the second access network device. The identifier of the source terminal device needs to be updated because after accessing a different access network device, the terminal device is allocated with a different temporary identifier (for example, the TEID) by the access network device. Therefore, the identifier of the terminal device needs to be updated.

Subsequently, the core network control plane device sends a first request to the first access network device, and the first access network device receives the first request. If a mapping relationship included in the second multicast table stored in the first access network device is the mapping relationship between the identifier of the target terminal device and the identifier of the target multicast group, the first access network device deletes a mapping relationship between the identifier of the source terminal device and a multicast group to which the source terminal device belongs from the second multicast table stored in the first access network device. Herein, target terminal devices in the second multicast table stored in the first access network device include the source terminal device. In addition, if terminal devices that join the second access network device belong to a same local area network, the core network control plane device sends, to the second access network device, the mapping relationship between the identifier of the source terminal device and an identifier of the multicast group to which the source terminal device belongs. The second access network device receives the mapping relationship between the identifier of the source terminal device and the identifier of the multicast group to which the source terminal device belongs from the core network control plane device, and stores the mapping relationship in a local multicast table. In this case, if the second access network device has stored a second multicast table previously, the second access network device only needs to add, to the second multicast table, the mapping relationship between the identifier of the source terminal device and the identifier of the multicast group to which the source terminal device belongs. If the second access network device has not stored a second multicast table previously, the second access network device establishes a second multicast table and adds, to the second multicast table, the mapping relationship between the identifier of the source terminal device and the identifier of the multicast group to which the source terminal device belongs. If terminal devices that join the second access network device belong to a plurality of local area networks, the core network control plane device sends, to the second access network device, a mapping relationship between the identifier of the source terminal device, the identifier of the target local area network, and an identifier of a multicast group to which the source terminal device belongs. The second access network device receives the mapping relationship between the identifier of the source terminal device, the identifier of the target local area network, and the identifier of the multicast group to which the source terminal device belongs from the core network control plane device, and stores the mapping relationship in a local multicast table.

For example, the source terminal device is the UE 1. The UE 1 initially accesses the gNB 1, and then is handed over from the gNB 1 to the gNB 2. An example in which a second multicast table currently stored in the gNB 1 is the multicast table shown in Table 5. The core network control plane device sends a first request to the gNB 1, where the first request carries the identifier of the UE 1. After receiving the first request, the gNB 1 deletes a mapping relationship between UE1 and 224.0.2.1 and a mapping relationship between UE1 and 224.0.2.4 from the second multicast table shown in Table 5 based on the identifier of the UE 1. The core network control plane device further sends UE1 and 224.0.2.4 and the mapping relationship between UE1 and 224.0.2.1 to the gNB 2. After receiving these pieces of information, the gNB 2 adds the information to a local second multicast table.

Alternatively, the core network control plane device sends a first request to the first access network device, and the first access network device receives the first request. If a mapping relationship included in the second multicast table stored in the first access network device is the mapping relationship between the identifier of the target terminal device, the identifier of the target local area network, and the identifier of the target multicast group, the first access network device deletes a mapping relationship between the identifier of the source terminal device, the identifier of the target local area network, and a multicast group to which the source terminal device belongs from the second multicast table stored in the first access network device. Herein, target terminal devices in the second multicast table stored in the first access network device include the source terminal device. In addition, if terminal devices that join the second access network device belong to a plurality of local area networks, the core network control plane device sends, to the second access network device, a mapping relationship between the identifier of the source terminal device, the identifier of the target local area network, and an identifier of a multicast group to which the source terminal device belongs. The second access network device receives the mapping relationship between the identifier of the source terminal device, the identifier of the target local area network, and the identifier of the multicast group to which the source terminal device belongs from the core network control plane device, and stores the mapping relationship in a local multicast table.

Herein, if a mapping relationship that is recorded in the second multicast table stored in the first access network device and that corresponds to the identifier of the source terminal device includes only a mapping relationship between the identifier of the source terminal device, the identifier of the target local area network, and the identifier of the target multicast group, the first access network device only needs to delete the mapping relationship between the identifier of the source terminal device, the identifier of the target local area network, and the identifier of the target multicast group. If mapping relationships that are recorded in the second multicast table stored in the first access network device and that correspond to the identifier of the source terminal device further include a mapping relationship between the identifier of the source terminal device, the identifier of the target local area network, and an identifier of another multicast group to which the source terminal device belongs, in addition to a mapping relationship between the identifier of the source terminal device, the identifier of the target local area network, and the identifier of the target multicast group, the first access network device needs to delete mapping relationships between the identifier of the source terminal device, the identifier of the target local area network, and identifiers of all multicast groups to which the source terminal device belongs.

For example, the source terminal device is the UE 1. The UE 1 initially accesses the gNB 1, and then is handed over from the gNB 1 to the gNB 2. An example in which a second multicast table currently stored in the gNB 1 is the multicast table shown in Table 6. The core network control plane device sends a first request to the gNB 1, where the first request carries the identifier of the UE 1. After receiving the first request, the gNB 1 deletes a mapping relationship between UE1, LAN1, and 224.0.2.1 and a mapping relationship between UE1, LAN1, and 224.0.2.4 from the second multicast table shown in Table 6 based on the identifier of the UE 1. The core network control plane device further sends UE1, LAN1, and 224.0.2.4 and the mapping relationship between UE1, LAN1, and 224.0.2.1 to the gNB 2. After receiving these pieces of information, the gNB 2 adds the information to a local second multicast table.

In this embodiment of the present invention, after the source terminal device is handed over from one access network device to another access network device, a multicast table is updated, so that information recorded in the multicast table can be accurate. This improves accuracy of sending multicast data by an access network device. In addition, the source terminal device may join another multicast group and become a multicast receiver. Therefore, it is ensured that a terminal device can normally receive multicast data by updating a multicast table of the access network device in a timely manner.

Optionally, after the core network control plane device sends the second multicast table to the target access network device, if the core network control plane device determines that the source terminal device leaves the target multicast group, the core network control plane device sends a second request to the first access network device accessed by the source terminal device. The first access network device receives the second request from the core network control plane device, and if a mapping relationship included in the second multicast table stored in the first access network device is the mapping relationship between the identifier of the target terminal device and the identifier of the target multicast group, the first access network device deletes, based on the second request, the mapping relationship between the identifier of the source terminal device and the identifier of the target multicast group from the multicast table stored in the first access network device. Herein, identifiers of target terminal devices in the second multicast table stored in the first access network device include the identifier of the source terminal device. If a mapping relationship included in the second multicast table stored in the first access network device is the mapping relationship between the identifier of the target terminal device, the identifier of the target local area network, and the identifier of the target multicast group, the first access network device deletes, based on the second request, the mapping relationship between the identifier of the target terminal device, the identifier of the target local area network, and the identifier of the target multicast group. When determining to leave the target multicast group, the source terminal device may send a leave message to the core network control plane device. Then the core network control plane device determines, based on the leave message, that the source terminal device leaves the target multicast group. Alternatively, the core network control plane device may determine, in another manner, that the source terminal device leaves the target multicast group. This is not specifically limited in this embodiment of the present invention.

For example, the source terminal device is the UE 1, the target multicast group has an IP address of 224.0.2.1. Then, the UE 1 leaves the target multicast group. An example in which a second multicast table currently stored in the gNB 1 is the multicast table shown in Table 5. The core network control plane device sends a second request to the gNB 1, where the second request carries the identifier of the UE 1 and the identifier 224.0.2.1 of the target multicast group. After receiving the second request, the gNB 1 deletes the mapping relationship between UE1 and 224.0.2.1 from the second multicast table shown in Table 5 based on the identifier of the UE 1 and 224.0.2.1.

In this embodiment of the present invention, after the source terminal device leaves the target multicast group, a multicast table is updated, which can avoid an unnecessary multicast forwarding operation. Because the source terminal device leaves the target multicast group, multicast data of the target multicast group may be no longer received.

To facilitate better implementation of the multicast data transmission method in the embodiments of the present invention, the present invention further provides a related device for implementing the method.

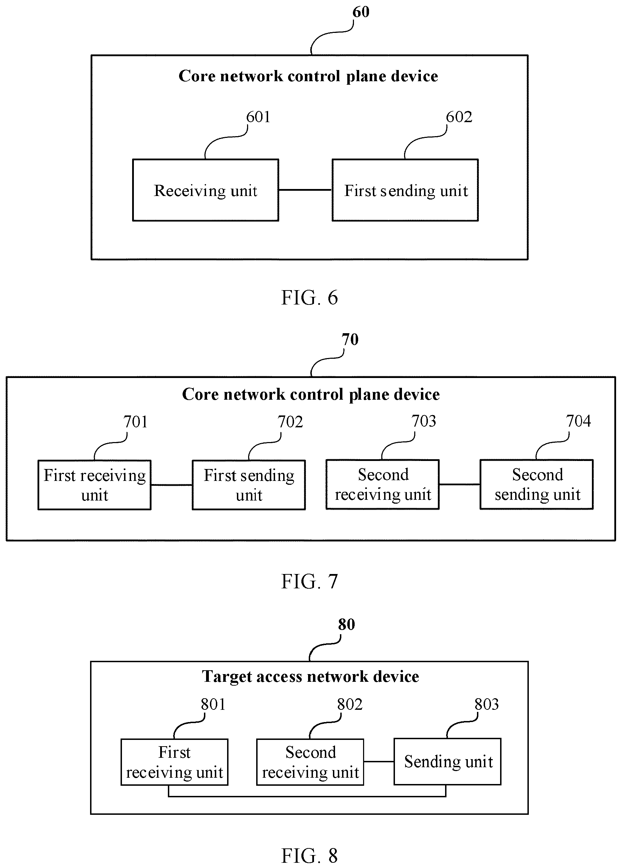

FIG. 6 is a schematic structural diagram of a core network control plane device according to an embodiment of the present invention. As shown in FIG. 6, a core network control plane device 60 includes a receiving unit 601 and a first sending unit 602.

The receiving unit 601 is configured to receive a multicast message from a core network user plane device, where the multicast message carries an identifier of a source terminal device sending multicast data and an identifier of a target multicast group corresponding to the multicast data.

The first sending unit 602 is configured to send an identifier of a target access network device that is to receive the multicast data to the core network user plane device based on the identifier of the source terminal device, the identifier of the target multicast group, and a first multicast table. The target access network device is an access network device accessed by a terminal device that belongs to the target multicast group in a target local area network. The target local area network is a local area network to which the source terminal device belongs. The first multicast table includes identifiers of terminal devices that join a local area network, an identifier of the local area network to which the terminal devices belong, an identifier of a multicast group to which the terminal devices belong, and an identifier of an access network device accessed by the terminal devices. The terminal devices include the source terminal device.

Optionally, the core network control plane device 60 further includes a second sending unit.

The second sending unit is configured to send a second multicast table to the target access network device after the receiving unit 601 receives the multicast message from the core network user plane device. The second multicast table includes a mapping relationship between an identifier of a target terminal device and the identifier of the target multicast group, and the target terminal device is a terminal device that belongs to the target multicast group in the target local area network and that accesses the target access network device.

Optionally, a mapping relationship included in the second multicast table is a mapping relationship between the identifier of the target terminal device, an identifier of the target local area network, and the identifier of the target multicast group. The core network control plane device 60 further includes a third sending unit.

The third sending unit is configured to send a mapping relationship between the identifier of the source terminal device and the identifier of the target local area network to the target access network device after the receiving unit 601 receives the multicast message from the core network user plane device. Alternatively, the core network control plane device 60 sends the identifier of the target local area network to the core network user plane device.

Optionally, the core network control plane device 60 further includes a fourth sending unit.

The fourth sending unit is configured to send a request message to the core network user plane device before the receiving unit 601 receives the multicast message from the core network user plane device. The request message is used to request the core network user plane device to establish a multicast tunnel with the target access network device, and the multicast tunnel is used to transmit the multicast data.

Optionally, the core network control plane device 60 further includes a first obtaining unit, a second obtaining unit and a third obtaining unit.

The first obtaining unit is configured to search the first multicast table based on the identifier of the source terminal device, to obtain the identifier that is of the target local area network and that corresponds to the identifier of the source terminal device after the receiving unit 601 receives the multicast message from the core network user plane device and before the sending unit sends the identifier of the target access network device that is to receive the multicast data to the core network user plane device.

The second obtaining unit is configured to search the first multicast table based on the identifier of the target local area network and the identifier of the target multicast group, to obtain the identifier that is of the target terminal device and that corresponds to the identifier of the target local area network and the identifier of the target multicast group.

The third obtaining unit is configured to search the first multicast table based on the identifier of the target terminal device, to obtain the identifier that is of the target access network device and that corresponds to the identifier of the target terminal device.

Optionally, the core network control plane device 60 further includes an updating unit, a fifth sending unit, and a sixth sending unit.

The updating unit is configured to be used by the core network control plane device 60 to update the identifier that is of the source terminal device and that is recorded in the first multicast table after the source terminal device is handed over from a first access network device to a second access network device, and update an identifier that is of the first access network device accessed by the source terminal device and that is recorded in the first multicast table to an identifier of the second access network device.

The fifth sending unit is configured to send a first request to the first access network device, where the first request is used to instruct the first access network device to delete a mapping relationship between the identifier of the source terminal device and an identifier of a multicast group to which the source terminal device belongs from a multicast table stored in the first access network device.

The sixth sending unit is configured to send, to the second access network device, the mapping relationship between the identifier of the source terminal device and the identifier of the multicast group to which the source terminal device belongs.

Optionally, the core network control plane device 60 further includes a determining unit and a seventh sending unit.

The determining unit is configured to determine that the source terminal device leaves the target multicast group after the second sending unit sends the second multicast table to the target access network device.

The seventh sending unit is configured to send a second request to the first access network device accessed by the source terminal device. The second request is used to instruct the first access network device to delete a mapping relationship between the identifier of the source terminal device and the identifier of the target multicast group from the multicast table stored in the first access network device.

It should be noted that, for specific implementations of functional units included in the core network control plane device 60 described in this embodiment of the present invention and corresponding beneficial effects, refer to related descriptions in steps S501 to S506 in the embodiment shown in FIG. 5. Details are not described herein again.

FIG. 7 is a schematic structural diagram of a core network user plane device according to an embodiment of the present invention. As shown in FIG. 7, a core network user plane device 70 includes a first receiving unit 701, a first sending unit 702, a second receiving unit 703, and a second sending unit 704.

The first receiving unit 701 is configured to receive multicast data from a source terminal device.

The first sending unit 702 is configured to send a multicast message to a core network control plane device, where the multicast message carries an identifier of the source terminal device and an identifier of a target multicast group corresponding to the multicast data.

The second receiving unit 703 is configured to receive, from the core network control plane device, an identifier of a target access network device that is to receive the multicast data. The target access network device is an access network device accessed by a terminal device that belongs to the target multicast group in a target local area network, and the target local area network is a local area network to which the source terminal device belongs.

The second sending unit 704 is configured to send the multicast data to the target access network device based on the identifier of the target access network device.

Optionally, the core network user plane device 70 further includes a third receiving unit.

The third receiving unit is configured to receive an identifier of the target local area network from the core network control plane device after the first sending unit sends the multicast message to the core network control plane device.

The second sending unit is specifically configured to add the identifier of the target local area network to the multicast data based on the identifier of the target access network device, and send, to the target access network device, multicast data to which the identifier of the target local area network is added.

It should be noted that, for specific implementations of functional units included in the core network user plane device 70 described in this embodiment of the present invention and corresponding beneficial effects, refer to related descriptions in steps S501 to S506 in the embodiment shown in FIG. 5. Details are not described herein again.

FIG. 8 is a schematic structural diagram of an access network device according to an embodiment of the present invention. As shown in FIG. 8, an access network device 80 includes a first receiving unit 801, a second receiving unit 802, and a sending unit 803.

The first receiving unit 801 is configured to receive a second multicast table from a core network control plane device. The second multicast table includes a mapping relationship between an identifier of a target terminal device and an identifier of a target multicast group. A source terminal device belongs to the target multicast group in a target local area network. The target multicast group is a multicast group corresponding to multicast data sent by the source terminal device. The target terminal device is a terminal device that belongs to the target multicast group in the target local area network and that accesses the target access network device 80.

The second receiving unit 802 is configured to receive the multicast data sent by the source terminal device from a core network user plane device.

The sending unit 803 is configured to send, based on the second multicast table, the multicast data to the target terminal device corresponding to the identifier of the target multicast group.

Optionally, a mapping relationship included in the second multicast table is a mapping relationship between the identifier of the target terminal device, an identifier of the target local area network, and the identifier of the target multicast group. The target access network device 80 further includes a third receiving unit.

The third receiving unit is configured to receive a mapping relationship between an identifier of the source terminal device and the identifier of the target local area network from the core network control plane device before the sending unit 803 sends, based on the second multicast table, the multicast data to the target terminal device corresponding to the identifier of the target multicast group; or
the multicast data received by the third receiving unit from the core network user plane device carries the identifier of the target local area network.

Optionally, if the target access network device 80 is a first access network device accessed by the source terminal device, and the source terminal device is handed over from the first access network device to a second access network device, the target access network device 80 further includes a fourth receiving unit, where the fourth receiving unit is configured to receive a first request from the core network control plane device after the first receiving unit 801 receives the second multicast table from the core network control plane device and delete, based on the first request, a mapping relationship between the identifier of the source terminal device and an identifier of a multicast group to which the source terminal device belongs from the second multicast table.

If the source terminal device is handed over from a first access network device to a second access network device, and the target access network device 80 is the second access network device, the target access network device 80 further includes a fifth receiving unit, where the fifth receiving unit is configured to receive a mapping relationship between the identifier of the source terminal device and an identifier of a multicast group to which the source terminal device belongs from the core network control plane device after the first receiving unit 801 receives the second multicast table from the core network control plane device.

Optionally, if the target access network device 80 is an access network device accessed by the source terminal device, and the source terminal device leaves the target multicast group, the target access network device 80 further includes a sixth receiving unit and a deleting unit.

The sixth receiving unit is configured to receive a second request from the core network control plane device after the first receiving unit 801 receives the second multicast table from the core network control plane device.

The deleting unit is configured to delete, based on the second request, a mapping relationship between the identifier of the source terminal device and the identifier of the target multicast group from the second multicast table.

Optionally, the sending unit 803 is specifically configured to:
search the second multicast table based on the identifier that is of the target multicast group and that is carried in the multicast data, to obtain the identifier that is of the target terminal device and that corresponds to the identifier of the target multicast group; and send the multicast data to the target terminal device based on the identifier of the target terminal device.

It should be noted that, for specific implementations of functional units included in the target access network device 80 described in this embodiment of the present invention and corresponding beneficial effects, refer to related descriptions in steps S501 to S506 in the embodiment shown in FIG. 5. Details are not described herein again.

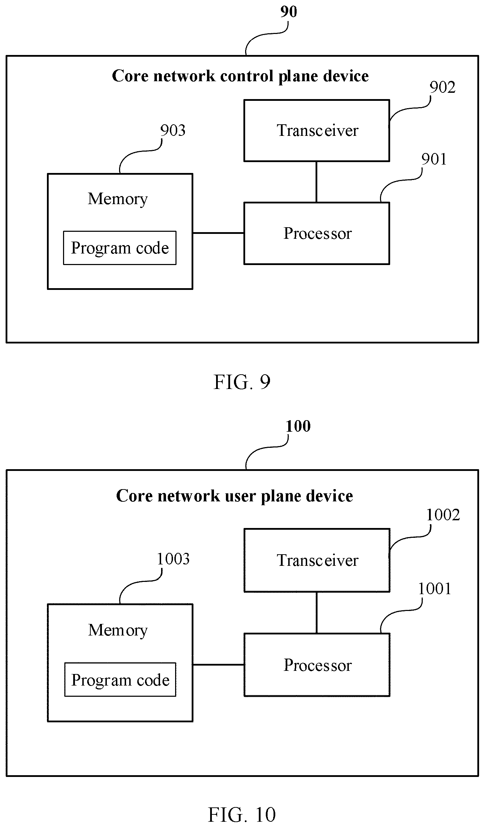

The core network control plane device 60 in the embodiment shown in FIG. 6 may be implemented by a core network control plane device 90 shown in FIG. 9. FIG. 9 is a schematic structural diagram of another core network control plane device according to an embodiment of the present invention. The core network control plane device 90 shown in FIG. 9 includes a processor 901 and a transceiver 902. The transceiver 902 is configured to support the core network control plane device 90 in performing data transmission with the core network user plane device and the target access network device in the foregoing embodiments. The processor 901 and the transceiver 902 may be connected by using a bus or in another manner. The core network control plane device 90 may further include a memory 903. The memory 903 is configured to store program code and data that are executed by the core network control plane device 90. The processor 901 is configured to execute the program code stored in the memory 903, to implement an action of the core network control plane device provided in the embodiment shown in FIG. 5.

The processor 901 may be a general purpose processor such as a central processing unit (Central Processing Unit, CPU), or may be a digital signal processor (Digital Signal Processing, DSP), an application-specific integrated circuit (Application Specific Integrated Circuit, ASIC), or one or more integrated circuits configured to implement this embodiment of the present invention. The processor 901 may process data that is received by using the transceiver 902. The processor 901 may also process data that is to be sent to the transceiver 902.

The memory 903 may include a volatile memory (Volatile Memory), for example, a random access memory (Random Access Memory, RAM). The memory 903 may also include a non-volatile memory (Non-volatile Memory), such as a read-only memory (Read-Only Memory, ROM), a flash memory (Flash Memory), a hard disk drive (Hard Disk Drive, HDD), or a solid-state drive (Solid-State Drive, SSD). The memory 903 may further include a combination of the foregoing types of memories. The memory 903 is connected to the processor 901 by using a bus.

It should be noted that the core network control plane device 90 may further include another module, for example, a power module or a Wireless Fidelity (Wireless fidelity, WiFi) module.

In this embodiment of the present invention, the transceiver 902 is configured to receive a multicast message from a core network user plane device, where the multicast message carries an identifier of a source terminal device sending multicast data and an identifier of a target multicast group corresponding to the multicast data. The processor 901 is configured to send, by using the transceiver 902, an identifier of a target access network device that is to receive the multicast data to the core network user plane device based on the identifier of the source terminal device, the identifier of the target multicast group, and a first multicast table. The target access network device is an access network device accessed by a terminal device that belongs to the target multicast group in a target local area network. The target local area network is a local area network to which the source terminal device belongs. The first multicast table includes identifiers of terminal devices that join a local area network, an identifier of the local area network to which the terminal devices belong, an identifier of a multicast group to which the terminal devices belong, and an identifier of an access network device accessed by the terminal devices. The terminal devices include the source terminal device.

It should be noted that, for specific implementations of functional modules included in the core network control plane device 90 described in this embodiment of the present invention and corresponding beneficial effects, refer to related descriptions in steps S501 to S506 in the embodiment shown in FIG. 5. Details are not described herein again.

The core network user plane device 70 in the embodiment shown in FIG. 7 may be implemented by a core network control plane device 100 shown in FIG. 10. FIG. 10 is a schematic structural diagram of another core network user plane device according to an embodiment of the present invention. The core network user plane device 100 shown in FIG. 10 includes a processor 1001 and a transceiver 1002. The transceiver 1002 is configured to support the core network user plane device 100 in performing data transmission with the core network control plane device and the target access network device in the foregoing embodiments. The processor 1001 and the transceiver 1002 may be connected by using a bus or in another manner. The core network control plane device 100 may further include a memory 1003. The memory 1003 is configured to store program code and data that are executed by the core network control plane device 100. The processor 1001 is configured to execute the program code stored in the memory 1003, to implement an action of the core network user plane device provided in the embodiment shown in FIG. 5.

The processor 1001 may be a general purpose processor such as a CPU, or may be a DSP, an ASIC, or one or more integrated circuits configured to implement this embodiment of the present invention. The processor 1001 may process data that is received by using the transceiver 1002. The processor 1001 may also process data that is to be sent to the transceiver 1002.

The memory 1003 may include a volatile memory, for example, a RAM. The memory 1003 may also include a non-volatile memory, for example, a ROM, a flash memory, a hard disk drive, or a solid-state drive. The memory 1003 may further include a combination of the foregoing types of memories. The memory 1003 is connected to the processor 1001 by using a bus.

It should be noted that the core network control plane device 100 may further include another module, for example, a power module or a WiFi module.

In this embodiment of the present invention, the transceiver 1002 is configured to receive multicast data from a source terminal device. The processor 1001 is configured to send a multicast message to a core network control plane device by using the transceiver 1002, where the multicast message carries an identifier of the source terminal device and an identifier of a target multicast group corresponding to the multicast data. The transceiver 1002 is further configured to receive, from the core network control plane device, an identifier of a target access network device that is to receive the multicast data. The target access network device is an access network device accessed by a terminal device that belongs to the target multicast group in a target local area network, and the target local area network is a local area network to which the source terminal device belongs. The processor 1001 is further configured to send the multicast data to the target access network device by using the transceiver 1002 based on the identifier of the target access network device.

It should be noted that, for specific implementations of functional modules included in the core network user plane device 100 described in this embodiment of the present invention and corresponding beneficial effects, refer to related descriptions in steps S501 to S506 in the embodiment shown in FIG. 5. Details are not described herein again.

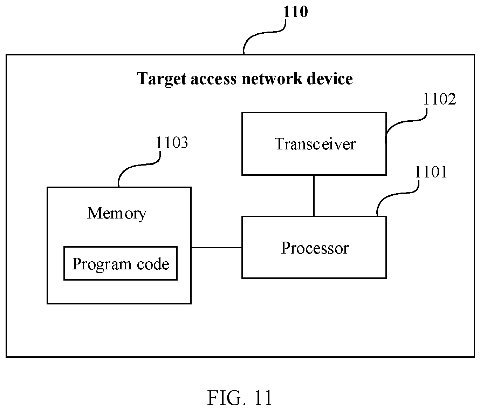

The target access network device 80 in the embodiment shown in FIG. 8 may be implemented by a target access network device 110 shown in FIG. 11. FIG. 11 is a schematic structural diagram of another access network device according to an embodiment of the present invention. The target access network device 110 shown in FIG. 11 includes a processor 1101 and a transceiver 1102. The transceiver 1102 is configured to support the target access network device 110 in performing data transmission with the core network control plane device and the core network user plane device in the foregoing embodiments. The processor 1101 and the transceiver 1102 may be connected by using a bus or in another manner. The target access network device 110 may further include a memory 1103. The memory 1103 is configured to store program code and data that are executed by the target access network device 110. The processor 1101 is configured to execute the program code stored in the memory 1103, to implement an action of the target access network device provided in the embodiment shown in FIG. 5.

The processor 1101 may be a general purpose processor such as a CPU, or may be a DSP, an ASIC, or one or more integrated circuits configured to implement this embodiment of the present invention. The processor 1101 may process data that is received by using the transceiver 1102. The processor 1101 may also process data that is to be sent to the transceiver 1102 for transfer by using an antenna.

The memory 1103 may include a volatile memory, for example, a RAM. The memory 1103 may also include a non-volatile memory, for example, a ROM, a flash memory, a hard disk drive, or a solid-state drive. The memory 1103 may further include a combination of the foregoing types of memories. The memory 1103 is connected to the processor 1101 by using a bus.

It should be noted that the target access network device 110 may further include another module, for example, a power module.

In this embodiment of the present invention, the transceiver 1102 is configured to receive a second multicast table from a core network control plane device. The second multicast table includes a mapping relationship between an identifier of a target terminal device and an identifier of a target multicast group. A source terminal device belongs to the target multicast group in a target local area network. The target multicast group is a multicast group corresponding to multicast data sent by the source terminal device. The target terminal device is a terminal device that belongs to the target multicast group in the target local area network and that accesses the target access network device. The transceiver 1102 is further configured to receive the multicast data sent by the source terminal device from a core network user plane device. The processor 1101 is configured to send the multicast data to the target terminal device corresponding to the identifier of the target multicast group by using the transceiver 1102 based on the second multicast table.

It should be noted that, for specific implementations of functional modules included in the target access network device 110 described in this embodiment of the present invention and corresponding beneficial effects, refer to related descriptions in steps S501 to S506 in the embodiment shown in FIG. 5. Details are not described herein again.

Method or algorithm steps described in this application may be implemented by using hardware, or may be implemented by a processor by executing a software instruction. The software instruction may include a corresponding software module. The software module may be stored in a RAM, a flash memory, a ROM, an erasable programmable read-only memory (Erasable Programmable ROM, EPROM), an electrically erasable programmable read-only memory (Electrically EPROM, EEPROM for short), a register, a hard disk, a removable hard disk, a compact disc read-only memory (CD-ROM), or any storage medium in another form well-known in the art. For example, a storage medium is coupled to the processor, so that the processor can read information from the storage medium, and write information into the storage medium. Certainly, the storage medium may alternatively be a component of the processor. The processor and the storage medium may be located in an ASIC. In addition, the ASIC may be located in a master access network device or a secondary access network device. Certainly, the processor and the storage medium may alternatively exist in the master access network device or the secondary access network device as discrete components.

A person skilled in the art should be aware that in the foregoing one or more examples, functions described in the embodiments of the present invention may be implemented by hardware, software, firmware, or any combination thereof. When the functions are implemented by software, the functions may be stored in a computer-readable medium or transmitted as one or more instructions or code in a computer-readable medium. The computer-readable medium includes a computer storage medium and a communications medium, where the communications medium includes any medium that facilitates transmission of a computer program from one place to another. The storage medium may be any available medium accessible to a general-purpose or dedicated computer.

In the foregoing specific implementations, the objectives, technical solutions, and benefits of the embodiments of the present invention are further described in detail. It should be understood that the foregoing descriptions are merely specific implementations of the embodiments of the present invention, but are not intended to limit the protection scope of the embodiments of present invention. Any modification, equivalent replacement, or improvement made based on technical solutions of the embodiments of the present invention shall fall within the protection scope of the embodiments of the present invention, which is defined by the claims.

## Claims

1. A multicast data transmission method, comprising:
receiving, by a core network control plane device (41), a multicast message from a core network user plane device (31), wherein the multicast message carries an identifier of a source terminal device (11, 12, 13, 14, 15, 16, 17) sending multicast data and an identifier of a target multicast group corresponding to the multicast data; and
sending, by the core network control plane device (41), an identifier of a target access network device (21, 22, 23) that is to receive the multicast data to the core network user plane device (31) based on the identifier of the source terminal device (11, 12, 13, 14, 15, 16, 17), the identifier of the target multicast group, and a first multicast table, wherein the target access network device (21, 22, 23) is an access network device accessed by a terminal device (11, 12, 13, 14, 15, 16, 17) that belongs to the target multicast group in a target local area network, the target local area network is a local area network to which the source terminal device (11, 12, 13, 14, 15, 16, 17) belongs, the first multicast table comprises identifiers of terminal devices (11, 12, 13, 14, 15, 16, 17) that join a local area network, an identifier of the local area network to which the terminal devices (11, 12, 13, 14, 15, 16, 17) belong, an identifier of a multicast group to which the terminal devices (11, 12, 13, 14, 15, 16, 17) belong, and an identifier of an access network device accessed by the terminal devices (11, 12, 13, 14, 15, 16, 17), and the terminal devices (11, 12, 13, 14, 15, 16, 17) comprise the source terminal device,
wherein after the receiving, by a core network control plane device (41), a multicast message from a core network user plane device (31), the method further comprises:
sending, by the core network control plane device (41), a second multicast table to the target access network device (21, 22, 23),
wherein the second multicast table comprises a mapping relationship between the identifier of the target terminal device (11, 12, 13, 14, 15, 16, 17) and the identifier of the target multicast group if the core network control plane device (41) determined that all terminal devices belong to a single local area network; and
wherein the second multicast table comprises a mapping relationship between the identifier of the target terminal device (11, 12, 13, 14, 15, 16, 17), an identifier of the target local area network, and the identifier of the target multicast group if the core network control device determined that all terminal devices belong to a plurality of local area networks.

2. The method according to claim 1, wherein the mapping relationship comprised in the second multicast table is a mapping relationship between the identifier of the target terminal device (11, 12, 13, 14, 15, 16, 17), an identifier of the target local area network, and the identifier of the target multicast group; and
after the receiving, by a core network control plane device (41), a multicast message from the core network user plane device (31), the method further comprises:
sending, by the core network control plane device (41) to the target access network device (21, 22, 23), a mapping relationship between the identifier of the source terminal device (11, 12, 13, 14, 15, 16, 17) and the identifier of the target local area network, or sending, by the core network control plane device (41), the identifier of the target local area network to the core network user plane device (31).

3. The method according to claim 1 or 2, wherein before the receiving, by a core network control plane device (41), a multicast message from a core network user plane device (31), the method further comprises:
sending, by the core network control plane device (41), a request message to the core network user plane device (31), wherein the request message is used to request the core network user plane device (31) to establish a multicast tunnel with the target access network device (21, 22, 23), and the multicast tunnel is used to transmit the multicast data.

4. The method according to any one of claims 1 to 3, wherein after the receiving, by a core network control plane device (41), a multicast message from a core network user plane device (31), and before the sending, by the core network control plane device (41), an identifier of a target access network device (21, 22, 23) that is to receive the multicast data to the core network user plane device (31), the method further comprises:
searching, by the core network control plane device (41), the first multicast table based on the identifier of the source terminal device (11, 12, 13, 14, 15, 16, 17), to obtain the identifier that is of the target local area network and that corresponds to the identifier of the source terminal device (11, 12, 13, 14, 15, 16, 17);
searching, by the core network control plane device (41), the first multicast table based on the identifier of the target local area network and the identifier of the target multicast group, to obtain the identifier that is of the target terminal device (11, 12, 13, 14, 15, 16, 17) and that corresponds to the identifier of the target local area network and the identifier of the target multicast group; and
searching, by the core network control plane device (41), the first multicast table based on the identifier of the target terminal device (11, 12, 13, 14, 15, 16, 17), to obtain the identifier that is of the target access network device (21, 22, 23) and that corresponds to the identifier of the target terminal device (11, 12, 13, 14, 15, 16, 17).

5. The method according to any one of claims 1 to 4, further comprising:
after the source terminal device (11, 12, 13, 14, 15, 16, 17) is handed over from a first access network device to a second access network device, updating, by the core network control plane device (41), the identifier that is of the source terminal device (11, 12, 13, 14, 15, 16, 17) and that is recorded in the first multicast table, and updating an identifier that is of the first access network device accessed by the source terminal device (11, 12, 13, 14, 15, 16, 17) and that is recorded in the first multicast table to an identifier of the second access network device;
sending, by the core network control plane device (41), a first request to the first access network device, wherein the first request is used to instruct the first access network device to delete a mapping relationship between the identifier of the source terminal device (11, 12, 13, 14, 15, 16, 17) and an identifier of a multicast group to which the source terminal device (11, 12, 13, 14, 15, 16, 17) belongs from a multicast table stored in the first access network device; and
sending, by the core network control plane device (41) to the second access network device, the mapping relationship between the identifier of the source terminal device (11, 12, 13, 14, 15, 16, 17) and the identifier of the multicast group to which the source terminal device (11, 12, 13, 14, 15, 16, 17) belongs.

6. A multicast data transmission method, comprising:
receiving, by a target access network device (21, 22, 23), a second multicast table from a core network control plane device (41),
wherein the second multicast table comprises a mapping relationship between the identifier of the target terminal device (11, 12, 13, 14, 15, 16, 17) and the identifier of the target multicast group if the core network control plane device (41) determined that all terminal devices belong to a single local area network; and
wherein the second multicast table comprises a mapping relationship between the identifier of the target terminal device (11, 12, 13, 14, 15, 16, 17), an identifier of the target local area network, and the identifier of the target multicast group if the core network control device determined that all terminal devices belong to a plurality of local area networks.,
and wherein a source terminal device (11, 12, 13, 14, 15, 16, 17) belongs to the target multicast group in a target local area network, the target multicast group is a multicast group corresponding to multicast data sent by the source terminal device, and the target terminal device (11, 12, 13, 14, 15, 16, 17) is a terminal device that belongs to the target multicast group in the target local area network and that accesses the target access network device (21, 22, 23);
receiving, by the target access network device (21, 22, 23), the multicast data sent by the source terminal device (11, 12, 13, 14, 15, 16, 17) from a core network user plane device (31); and
sending, by the target access network device (21, 22, 23) based on the second multicast table, the multicast data to the target terminal device (11, 12, 13, 14, 15, 16, 17) corresponding to the identifier of the target multicast group.

7. The method according to claim 6, wherein the mapping relationship comprised in the second multicast table is a mapping relationship between the identifier of the target terminal device (11, 12, 13, 14, 15, 16, 17), an identifier of the target local area network, and the identifier of the target multicast group; and
before the sending, by the target access network device (21, 22, 23) based on the second multicast table, the multicast data to the target terminal device (11, 12, 13, 14, 15, 16, 17) corresponding to the identifier of the target multicast group, the method further comprises: receiving, by the target access network device (21, 22, 23), a mapping relationship between an identifier of the source terminal device (11, 12, 13, 14, 15, 16, 17) and the identifier of the target local area network from the core network control plane device (41), or
the multicast data received by the target access network device (21, 22, 23) from the core network user plane device (31) carries the identifier of the target local area network.

8. The method according to claim 6 or 7, wherein
if the target access network device (21, 22, 23) is a first access network device accessed by the source terminal device (11, 12, 13, 14, 15, 16, 17), and the source terminal device (11, 12, 13, 14, 15, 16, 17) is handed over from the first access network device to a second access network device, after the receiving, by a target access network device (21, 22, 23), a second multicast table from a core network control plane device (41), the method further comprises: receiving, by the target access network device (21, 22, 23), a first request from the core network control plane device (41) and deleting, based on the first request, a mapping relationship between the identifier of the source terminal device (11, 12, 13, 14, 15, 16, 17) and an identifier of a multicast group to which the source terminal device (11, 12, 13, 14, 15, 16, 17) belongs from the second multicast table; or
if the source terminal device (11, 12, 13, 14, 15, 16, 17) is handed over from a first access network device to a second access network device, and the target access network device (21, 22, 23) is the second access network device, after the receiving, by a target access network device (21, 22, 23), a second multicast table from a core network control plane device (41), the method further comprises: receiving, by the target access network device (21, 22, 23), a mapping relationship between the identifier of the source terminal device (11, 12, 13, 14, 15, 16, 17) and an identifier of a multicast group to which the source terminal device (11, 12, 13, 14, 15, 16, 17) belongs from the core network control plane device (41).

9. The method according to any one of claims 6 to 8, wherein the sending, by the target access network device (21, 22, 23) based on the second multicast table, the multicast data to the target terminal device (11, 12, 13, 14, 15, 16, 17) corresponding to the identifier of the target multicast group comprises:
searching, by the target access network device (21, 22, 23), the second multicast table based on the identifier that is of the target multicast group and that is carried in the multicast data, to obtain the identifier that is of the target terminal device (11, 12, 13, 14, 15, 16, 17) and that corresponds to the identifier of the target multicast group; and
sending, by the target access network device (21, 22, 23), the multicast data to the target terminal device (11, 12, 13, 14, 15, 16, 17) based on the identifier of the target terminal device (11, 12, 13, 14, 15, 16, 17).

10. A core network control plane device (41), comprising means configured to perform the method according to any one of claims 1-5.

11. An access network device, comprising means configured to perform the method according to any one of claims 6-9.

## Patentansprüche

1. Multicast-Datenübertragungsverfahren, umfassend:
Empfangen, durch ein Kernnetzwerk-Steuerungsebenengerät (41), einer Multicastnachricht von einem Kernnetzwerk-Benutzerebenengerät (31), wobei die Multicastnachricht eine Kennung eines Quellen-Endgeräts (11, 12, 13, 14, 15, 16, 17), das Multicastdaten sendet, und eine Kennung einer Ziel-Multicastgruppe korrespondierend mit den Multicastdaten trägt; und
Senden, durch das Kernnetzwerk-Steuerungsebenengerät (41), einer Kennung eines Ziel-Zugangsnetzwerkgeräts (21, 22, 23), das die Multicastdaten empfangen soll, an das Kernnetzwerk-Benutzerebenengerät (31) basierend auf der Kennung des Quellen-Endgeräts (11, 12, 13, 14, 15, 16, 17), der Kennung der Ziel-Multicastgruppe und einer ersten Multicasttabelle, wobei das Ziel-Zugangsnetzwerkgerät (21, 22, 23) ein Zugangsnetzwerkgerät ist, auf das durch ein Endgerät (11, 12, 13, 14, 15, 16, 17), das zu der Ziel-Multicastgruppe in einem Ziel-Nahbereichsnetzwerk gehört, zugegriffen wird, wobei das Ziel-Nahbereichsnetzwerk ein Nahbereichsnetzwerk ist, zu dem das Quellen-Endgerät (11, 12, 13, 14, 15, 16, 17) gehört, die erste Multicasttabelle Kennungen von Endgeräten (11, 12, 13, 14, 15, 16, 17), die einem Nahbereichsnetzwerk beitreten, eine Kennung des Nahbereichsnetzwerks, zu dem die Endgeräte (11, 12, 13, 14, 15, 16, 17) gehören, eine Kennung einer Multicastgruppe, zu der die Endgeräte (11, 12, 13, 14, 15, 16, 17) gehören, und eine Kennung eines Zugangsnetzwerkgeräts, auf das durch die Endgeräte (11, 12, 13, 14, 15, 16, 17) zugegriffen wird, umfasst und die Endgeräte (11, 12, 13, 14, 15, 16, 17) das Quellen-Endgerät umfassen,
wobei das Verfahren nach dem Empfangen, durch ein Kernnetzwerk-Steuerungsebenengerät (41), einer Multicastnachricht von einem Kernnetzwerk-Benutzerebenengerät (31) ferner Folgendes umfasst:
Senden, durch das Kernnetzwerk-Steuerungsebenengerät (41), einer zweiten Multicasttabelle an das Ziel-Zugangsnetzwerkgerät (21, 22, 23),
wobei die zweite Multicasttabelle eine Abbildungsbeziehung zwischen der Kennung des Ziel-Endgeräts (11, 12, 13, 14, 15, 16, 17) und der Kennung der Ziel-Multicastgruppe umfasst, wenn das Kernnetzwerk-Steuerungsebenengerät (41) bestimmte, dass alle Endgeräte zu einem einzelnen Nahbereichsnetzwerk gehören; und wobei die zweite Multicasttabelle eine Abbildungsbeziehung zwischen der Kennung des Ziel-Endgeräts (11, 12, 13, 14, 15, 16, 17), einer Kennung des Ziel-Nahbereichsnetzwerks und der Kennung der Ziel-Multicastgruppe umfasst, wenn das Kernnetzwerk-Steuergerät bestimmte, dass alle Endgeräte zu einer Vielzahl von Nahbereichsnetzwerken gehören.

2. Verfahren nach Anspruch 1, wobei die Abbildungsbeziehung, die in der zweiten Multicasttabelle enthalten ist, eine Abbildungsbeziehung zwischen der Kennung des Ziel-Endgeräts (11, 12, 13, 14, 15, 16, 17), einer Kennung des Ziel-Nahbereichsnetzwerks und der Kennung der Ziel-Multicastgruppe ist; und
das Verfahren nach dem Empfangen, durch ein Kernnetzwerk-Steuerungsebenengerät (41), einer Multicastnachricht von dem Kernnetzwerk-Benutzerebenengerät (31) ferner Folgendes umfasst:
Senden, durch das Kernnetzwerk-Steuerungsebenengerät (41) an das Ziel-Zugangsnetzwerkgerät (21, 22, 23), einer Abbildungsbeziehung zwischen der Kennung des Quellen-Endgeräts (11, 12, 13, 14, 15, 16, 17) und der Kennung des Ziel-Nahbereichsnetzwerks oder Senden, durch das Kernnetzwerk-Steuerungsebenengerät (41), der Kennung des Ziel-Nahbereichsnetzwerks an das Kernnetzwerk-Benutzerebenengerät (31).

3. Verfahren nach Anspruch 1 oder 2, wobei das Verfahren vor dem Empfangen, durch ein Kernnetzwerk-Steuerungsebenengerät (41), einer Multicastnachricht von einem Kernnetzwerk-Benutzerebenengerät (31) ferner Folgendes umfasst:
Senden, durch das Kernnetzwerk-Steuerungsebenengerät (41), einer Aufforderungsnachricht an das Kernnetzwerk-Benutzerebenengerät (31), wobei die Aufforderungsnachricht verwendet wird, das Kernnetzwerk-Benutzerebenengerät (31) aufzufordern, einen Multicasttunnel mit dem Ziel-Zugangsnetzwerkgerät (21, 22, 23) einzurichten, und der Multicasttunnel verwendet wird, die Multicastdaten zu übertragen.

4. Verfahren nach einem der Ansprüche 1 bis 3, wobei das Verfahren nach dem Empfangen, durch ein Kernnetzwerk-Steuerungsebenengerät (41), einer Multicastnachricht von einem Kernnetzwerk-Benutzerebenengerät (31) und vor dem Senden, durch das Kernnetzwerk-Steuerungsebenengerät (41), einer Kennung eines Ziel-Zugangsnetzwerkgeräts (21, 22, 23), das die Multicastdaten empfangen soll, an das Kernnetzwerk-Benutzerebenengerät (31) ferner Folgendes umfasst:
Durchsuchen, durch das Kernnetzwerk-Steuerungsebenengerät (41), der ersten Multicasttabelle basierend auf der Kennung des Quellen-Endgeräts (11, 12, 13, 14, 15, 16, 17), um die Kennung zu erlangen, die die des Ziel-Nahbereichsnetzwerks ist und die mit der Kennung des Quellen-Endgeräts (11, 12, 13, 14, 15, 16, 17) korrespondiert;
Durchsuchen, durch das Kernnetzwerk-Steuerungsebenengerät (41), der ersten Multicasttabelle basierend auf der Kennung des Ziel-Nahbereichsnetzwerks und der Kennung der Ziel-Multicastgruppe, um die Kennung zu erlangen, die die des Ziel-Endgeräts (11, 12, 13, 14, 15, 16, 17) ist und die mit der Kennung des Ziel-Nahbereichsnetzwerks und der Kennung der Ziel-Multicastgruppe korrespondiert; und Durchsuchen, durch das Kernnetzwerk-Steuerungsebenengerät (41), der ersten Multicasttabelle basierend auf der Kennung des Ziel-Endgeräts (11, 12, 13, 14, 15, 16, 17), um die Kennung zu erlangen, die die des Ziel-Zugangsnetzwerkgeräts (21, 22, 23) ist und die mit der Kennung des Ziel-Endgeräts (11, 12, 13, 14, 15, 16, 17) korrespondiert.

5. Verfahren nach einem der Ansprüche 1 bis 4, ferner umfassend:
nachdem das Quellen-Endgerät (11, 12, 13, 14, 15, 16, 17) von einem ersten Zugangsnetzwerkgerät an ein zweites Zugangsnetzwerkgerät übergeben wird, Aktualisieren, durch das Kernnetzwerk-Steuerungsebenengerät (41), der Kennung, die die des Quellen-Endgeräts (11, 12, 13, 14, 15, 16, 17) ist und die in der ersten Multicasttabelle aufgezeichnet ist, und Aktualisieren einer Kennung, die die des ersten Zugangsnetzwerkgeräts, auf das durch das Quellen-Endgerät (11, 12, 13, 14, 15, 16, 17) zugegriffen wird, ist und die in der ersten Multicasttabelle aufgezeichnet ist, zu einer Kennung des zweiten Zugangsnetzwerkgeräts;
Senden, durch das Kernnetzwerk-Steuerungsebenengerät (41), einer ersten Aufforderung an das erste Zugangsnetzwerkgerät, wobei die erste Aufforderung verwendet wird, das erste Zugangsnetzwerkgerät anzuweisen, eine Abbildungsbeziehung zwischen der Kennung des Quellen-Endgeräts (11, 12, 13, 14, 15, 16, 17) und einer Kennung einer Multicastgruppe, zu der das Quellen-Endgerät (11, 12, 13, 14, 15, 16, 17) gehört, aus einer in dem ersten Zugangsnetzwerkgerät gespeicherten Multicasttabelle zu löschen; und
Senden, durch das Kernnetzwerk-Steuerungsebenengerät (41) an das zweite Zugangsnetzwerkgerät, der Abbildungsbeziehung zwischen der Kennung des Quellen-Endgeräts (11, 12, 13, 14, 15, 16, 17) und der Kennung der Multicastgruppe, zu der das Quellen-Endgerät (11, 12, 13, 14, 15, 16, 17) gehört.

6. Multicast-Datenübertragungsverfahren, umfassend:
Empfangen, durch ein Ziel-Zugangsnetzwerkgerät (21, 22, 23), einer zweiten Multicasttabelle von einem Kernnetzwerk-Steuerungsebenengerät (41),
wobei die zweite Multicasttabelle eine Abbildungsbeziehung zwischen der Kennung des Ziel-Endgeräts (11, 12, 13, 14, 15, 16, 17) und der Kennung der Ziel-Multicastgruppe umfasst, wenn das Kernnetzwerk-Steuerungsebenengerät (41) bestimmte, dass alle Endgeräte zu einem einzelnen Nahbereichsnetzwerk gehören; und
wobei die zweite Multicasttabelle eine Abbildungsbeziehung zwischen der Kennung des Ziel-Endgeräts (11, 12, 13, 14, 15, 16, 17), einer Kennung des Ziel-Nahbereichsnetzwerks und der Kennung der Ziel-Multicastgruppe umfasst, wenn das Kernnetzwerk-Steuergerät bestimmte, dass alle Endgeräte zu einer Vielzahl von Nahbereichsnetzwerken gehören.,
und wobei ein Quellen-Endgerät (11, 12, 13, 14, 15, 16, 17) zu der Ziel-Multicastgruppe in einem Ziel-Nahbereichsnetzwerk gehört, die Ziel-Multicastgruppe eine Multicastgruppe korrespondierend mit durch das Quellen-Endgerät gesandten Multicastdaten ist und das Ziel-Endgerät (11, 12, 13, 14, 15, 16, 17) ein Endgerät ist, das zu der Ziel-Multicastgruppe in dem Ziel-Nahbereichsnetzwerk gehört und das auf das Ziel-Zugangsnetzwerkgerät (21, 22, 23) zugreift;
Empfangen, durch das Ziel-Zugangsnetzwerkgerät (21, 22, 23), der durch das Quellen-Endgerät (11, 12, 13, 14, 15, 16, 17) von einem Kernnetzwerk-Benutzerebenengerät (31) gesandten Multicastdaten; und
Senden, durch das Ziel-Zugangsnetzwerkgerät (21, 22, 23) basierend auf der zweiten Multicasttabelle, der Multicastdaten an das Ziel-Endgerät (11, 12, 13, 14, 15, 16, 17) korrespondierend mit der Kennung der Ziel-Multicastgruppe.

7. Verfahren nach Anspruch 6, wobei die Abbildungsbeziehung, die in der zweiten Multicasttabelle enthalten ist, eine Abbildungsbeziehung zwischen der Kennung des Ziel-Endgeräts (11, 12, 13, 14, 15, 16, 17), einer Kennung des Ziel-Nahbereichsnetzwerks und der Kennung der Ziel-Multicastgruppe ist; und
das Verfahren vor dem Senden, durch das Ziel-Zugangsnetzwerkgerät (21, 22, 23) basierend auf der zweiten Multicasttabelle, der Multicastdaten an das Ziel-Endgerät (11, 12, 13, 14, 15, 16, 17) korrespondierend mit der Kennung der Ziel-Multicastgruppe ferner Folgendes umfasst: Empfangen, durch das Ziel-Zugangsnetzwerkgerät (21, 22, 23), einer Abbildungsbeziehung zwischen einer Kennung des Quellen-Endgeräts (11, 12, 13, 14, 15, 16, 17) und der Kennung des Ziel-Nahbereichsnetzwerks von dem Kernnetzwerk-Steuerungsebenengerät (41), oder
die durch das Ziel-Zugangsnetzwerkgerät (21, 22, 23) von dem Kernnetzwerk-Benutzerebenengerät (31) empfangenen Multicastdaten die Kennung des Ziel-Nahbereichsnetzwerks tragen.

8. Verfahren nach Anspruch 6 oder 7, wobei
wenn das Ziel-Zugangsnetzwerkgerät (21, 22, 23) ein erstes Zugangsnetzwerkgerät ist, auf das durch das Quellen-Endgerät (11, 12, 13, 14, 15, 16, 17) zugegriffen wird, und das Quellen-Endgerät (11, 12, 13, 14, 15, 16, 17) von dem ersten Zugangsnetzwerkgerät an ein zweites Zugangsnetzwerkgerät übergeben wird, das Verfahren nach dem Empfangen, durch ein Ziel-Zugangsnetzwerkgerät (21, 22, 23), einer zweiten Multicasttabelle von einem Kernnetzwerk-Steuerungsebenengerät (41) ferner Folgendes umfasst: Empfangen, durch das Ziel-Zugangsnetzwerkgerät (21, 22, 23), einer ersten Aufforderung von dem Kernnetzwerk-Steuerungsebenengerät (41) und Löschen, basierend auf der ersten Aufforderung, einer Abbildungsbeziehung zwischen der Kennung des Quellen-Endgeräts (11, 12, 13, 14, 15, 16, 17) und einer Kennung einer Multicastgruppe, zu der das Quellen-Endgerät (11, 12, 13, 14, 15, 16, 17) gehört, aus der zweiten Multicasttabelle; oder
wenn das Quellen-Endgerät (11, 12, 13, 14, 15, 16, 17) von einem ersten Zugangsnetzwerkgerät an ein zweites Zugangsnetzwerkgerät übergeben wird und das Ziel-Zugangsnetzwerkgerät (21, 22, 23) das zweite Zugangsnetzwerkgerät ist, das Verfahren nach dem Empfangen, durch ein Ziel-Zugangsnetzwerkgerät (21, 22, 23), einer zweiten Multicasttabelle von einem Kernnetzwerk-Steuerungsebenengerät (41) ferner Folgendes umfasst: Empfangen, durch das Ziel-Zugangsnetzwerkgerät (21, 22, 23), einer Abbildungsbeziehung zwischen der Kennung des Quellen-Endgeräts (11, 12, 13, 14, 15, 16, 17) und einer Kennung einer Multicastgruppe, zu der das Quellen-Endgerät (11, 12, 13, 14, 15, 16, 17) gehört, von dem Kernnetzwerk-Steuerungsebenengerät (41).

9. Verfahren nach einem der Ansprüche 6 bis 8, wobei das Senden, durch das Ziel-Zugangsnetzwerkgerät (21, 22, 23) basierend auf der zweiten Multicasttabelle, der Multicastdaten an das Ziel-Endgerät (11, 12, 13, 14, 15, 16, 17) korrespondierend mit der Kennung der Ziel-Multicastgruppe Folgendes umfasst:
Durchsuchen, durch das Ziel-Zugangsnetzwerkgerät (21, 22, 23), der zweiten Multicasttabelle basierend auf der Kennung, die die der Ziel-Multicastgruppe ist und die in den Multicastdaten getragen wird, um die Kennung zu erlangen, die die des Ziel-Endgeräts (11, 12, 13, 14, 15, 16, 17) ist und die mit der Kennung der Ziel-Multicastgruppe korrespondiert; und
Senden, durch das Ziel-Zugangsnetzwerkgerät (21, 22, 23), der Multicastdaten an das Ziel-Endgerät (11, 12, 13, 14, 15, 16, 17) basierend auf der Kennung des Ziel-Endgeräts (11, 12, 13, 14, 15, 16, 17).

10. Kernnetzwerk-Steuerungsebenengerät (41), umfassend Mittel, die zum Durchführen des Verfahrens nach einem der Ansprüche 1-5 konfiguriert sind.

11. Zugangsnetzwerkgerät, umfassend Mittel, die zum Durchführen des Verfahrens nach einem der Ansprüche 6-9 konfiguriert sind.

## Revendications

1. Procédé de transmission de données de multidiffusion, comprenant :
la réception, par un dispositif de plan de commande de réseau central (41), d'un message de multidiffusion provenant d'un dispositif de plan d'utilisateur de réseau central (31), le message de multidiffusion transportant un identifiant d'un dispositif terminal source (11, 12, 13, 14, 15, 16, 17) envoyant des données de multidiffusion et un identifiant d'un groupe de multidiffusion cible correspondant aux données de multidiffusion ; et
l'envoi, par le dispositif de plan de commande de réseau central (41), d'un identifiant d'un dispositif de réseau d'accès cible (21, 22, 23) qui doit recevoir les données de multidiffusion au dispositif de plan d'utilisateur de réseau central (31) sur la base de l'identifiant du dispositif terminal source (11, 12, 13, 14, 15, 16, 17), de l'identifiant du groupe de multidiffusion cible et d'une première table de multidiffusion, le dispositif de réseau d'accès cible (21, 22, 23) étant un dispositif de réseau d'accès auquel accède un dispositif terminal (11, 12, 13, 14, 15, 16, 17) qui appartient au groupe de multidiffusion cible dans un réseau local cible, le réseau local cible étant un réseau local auquel appartient le dispositif terminal source (11, 12, 13, 14, 15, 16, 17), la première table de multidiffusion comprenant des identifiants de dispositifs terminaux (11, 12, 13, 14, 15, 16, 17) qui rejoignent un réseau local, un identifiant du réseau local auquel appartiennent les dispositifs terminaux (11, 12, 13, 14, 15, 16, 17), un identifiant d'un groupe de multidiffusion auquel appartiennent les dispositifs terminaux (11, 12, 13, 14, 15, 16, 17), et un identifiant d'un dispositif de réseau d'accès auquel accèdent les dispositifs terminaux (11, 12, 13, 14, 15, 16, 17), et les dispositifs terminaux (11, 12, 13, 14, 15, 16, 17) comprenant le dispositif terminal source,
après la réception, par un dispositif de plan de commande de réseau central (41), d'un message de multidiffusion provenant d'un dispositif de plan d'utilisateur de réseau central (31), le procédé comprenant en outre :
l'envoi, par le dispositif de plan de commande de réseau central (41), d'une seconde table de multidiffusion au dispositif de réseau d'accès cible (21, 22, 23),
la seconde table de multidiffusion comprenant une relation de mise en correspondance entre l'identifiant du dispositif terminal cible (11, 12, 13, 14, 15, 16, 17) et l'identifiant du groupe de multidiffusion cible si le dispositif de plan de commande de réseau central (41) a déterminé que tous les dispositifs terminaux appartiennent à un seul réseau local ; et
la seconde table de multidiffusion comprenant une relation de mise en correspondance entre l'identifiant du dispositif terminal cible (11, 12, 13, 14, 15, 16, 17), un identifiant du réseau local cible et l'identifiant du groupe de multidiffusion cible si le dispositif de commande de réseau central a déterminé que tous les dispositifs terminaux appartiennent à une pluralité de réseaux locaux.

2. Procédé selon la revendication 1, la relation de mise en correspondance comprise dans la seconde table de multidiffusion étant une relation de mise en correspondance entre l'identifiant du dispositif terminal cible (11, 12, 13, 14, 15, 16, 17), un identifiant du réseau local cible, et l'identifiant du groupe de multidiffusion cible ; et
après la réception, par un dispositif de plan de commande de réseau central (41), d'un message de multidiffusion en provenance du dispositif de plan d'utilisateur de réseau central (31), le procédé comprenant en outre :
l'envoi, par le dispositif de plan de commande de réseau central (41) au dispositif de réseau d'accès cible (21, 22, 23), d'une relation de mise en correspondance entre l'identifiant du dispositif terminal source (11, 12, 13, 14, 15, 16, 17) et l'identifiant du réseau local cible, ou l'envoi, par le dispositif de plan de commande de réseau central (41), de l'identifiant du réseau local cible au dispositif de plan d'utilisateur de réseau central (31).

3. Procédé selon la revendication 1 ou 2, avant la réception, par un dispositif de plan de commande de réseau central (41), d'un message de multidiffusion provenant d'un dispositif de plan d'utilisateur de réseau central (31), le procédé comprenant en outre :
l'envoi, par le dispositif de plan de commande de réseau central (41), d'un message de demande au dispositif de plan d'utilisateur de réseau central (31), le message de demande étant utilisé pour ordonner au dispositif de plan d'utilisateur de réseau central (31) d'établir un tunnel de multidiffusion avec le dispositif de réseau d'accès cible (21, 22, 23), et le tunnel de multidiffusion étant utilisé pour transmettre les données de multidiffusion.

4. Procédé selon l'une quelconque des revendications 1 à 3, après la réception, par un dispositif de plan de commande de réseau central (41), d'un message de multidiffusion provenant d'un dispositif de plan d'utilisateur de réseau central (31), et avant l'envoi, par le dispositif de plan de commande de réseau central (41), d'un identifiant d'un dispositif de réseau d'accès cible (21, 22, 23) qui doit recevoir les données de multidiffusion au dispositif de plan d'utilisateur de réseau central (31), le procédé comprenant en outre :
la recherche, par le dispositif de plan de commande de réseau central (41), de la première table de multidiffusion sur la base de l'identifiant du dispositif terminal source (11, 12, 13, 14, 15, 16, 17), afin d'obtenir l'identifiant qui est du réseau local cible et qui correspond à l'identifiant du dispositif terminal source (11, 12, 13, 14, 15, 16, 17) ;
la recherche, par le dispositif de plan de commande de réseau central (41), de la première table de multidiffusion sur la base de l'identifiant du réseau local cible et de l'identifiant du groupe de multidiffusion cible, afin d'obtenir l'identifiant qui est du dispositif terminal cible (11, 12, 13, 14, 15, 16, 17) et qui correspond à l'identifiant du réseau local cible et à l'identifiant du groupe de multidiffusion cible ; et
la recherche, par le dispositif de plan de commande de réseau central (41), de la première table de multidiffusion sur la base de l'identifiant du dispositif terminal cible (11, 12, 13, 14, 15, 16, 17), afin d'obtenir l'identifiant qui est du dispositif de réseau d'accès cible (21, 22, 23) et qui correspond à l'identifiant du dispositif terminal cible (11, 12, 13, 14, 15, 16, 17).

5. Procédé selon l'une quelconque des revendications 1 à 4, comprenant en outre :
après le transfert du dispositif terminal source (11, 12, 13, 14, 15, 16, 17) d'un premier dispositif de réseau d'accès à un second dispositif de réseau d'accès, la mise à jour, par le dispositif de plan de commande de réseau central (41), de l'identifiant qui est du dispositif terminal source (11, 12, 13, 14, 15, 16, 17) et qui est enregistré dans la première table de multidiffusion, et la mise à jour d'un identifiant qui est du premier dispositif de réseau d'accès auquel a accédé le dispositif terminal source (11, 12, 13, 14, 15, 16, 17) et qui est enregistré dans la première table de multidiffusion à un identifiant du second dispositif de réseau d'accès ;
l'envoi, par le dispositif de plan de commande de réseau central (41), d'une première demande au premier dispositif de réseau d'accès, la première demande étant utilisée pour ordonner au premier dispositif de réseau d'accès de supprimer une relation de mise en correspondance entre l'identifiant du dispositif terminal source (11, 12, 13, 14, 15, 16, 17) et un identifiant d'un groupe de multidiffusion auquel appartient le dispositif terminal source (11, 12, 13, 14, 15, 16, 17) dans une table de multidiffusion enregistrée dans le premier dispositif de réseau d'accès ; et
l'envoi, par le dispositif de plan de commande de réseau central (41) au second dispositif de réseau d'accès, de la relation de mise en correspondance entre l'identifiant du dispositif terminal source (11, 12, 13, 14, 15, 16, 17) et l'identifiant du groupe de multidiffusion auquel appartient le dispositif terminal source (11, 12, 13, 14, 15, 16, 17).

6. Procédé de transmission de données de multidiffusion, comprenant :
la réception, par un dispositif de réseau d'accès cible (21, 22, 23), d'une seconde table de multidiffusion en provenance d'un dispositif de plan de commande de réseau central (41),
la seconde table de multidiffusion comprenant une relation de mise en correspondance entre l'identifiant du dispositif terminal cible (11, 12, 13, 14, 15, 16, 17) et l'identifiant du groupe de multidiffusion cible si le dispositif de plan de commande de réseau central (41) a déterminé que tous les dispositifs terminaux appartiennent à un seul réseau local ; et
la seconde table de multidiffusion comprenant une relation de mise en correspondance entre l'identifiant du dispositif terminal cible (11, 12, 13, 14, 15, 16, 17), un identifiant du réseau local cible et l'identifiant du groupe de multidiffusion cible si le dispositif de commande de réseau central a déterminé que tous les dispositifs terminaux appartiennent à une pluralité de réseaux locaux,
et un dispositif terminal source (11, 12, 13, 14, 15, 16, 17) appartenant au groupe de multidiffusion cible dans un réseau local cible, le groupe de multidiffusion cible étant un groupe de multidiffusion correspondant aux données de multidiffusion envoyées par le dispositif terminal source, et le dispositif terminal cible (11, 12, 13, 14, 15, 16, 17) étant un dispositif terminal qui appartient au groupe de multidiffusion cible dans le réseau local cible et qui accède au dispositif de réseau d'accès cible (21, 22, 23) ;
la réception, par le dispositif de réseau d'accès cible (21, 22, 23), des données de multidiffusion envoyées par le dispositif terminal source (11, 12, 13, 14, 15, 16, 17) provenant d'un dispositif de plan d'utilisateur de réseau central (31), et
l'envoi, par le dispositif de réseau d'accès cible (21, 22, 23) sur la base de la seconde table de multidiffusion, des données de multidiffusion au dispositif terminal cible (11, 12, 13, 14, 15, 16, 17) correspondant à l'identifiant du groupe de multidiffusion cible.

7. Procédé selon la revendication 6, la relation de mise en correspondance comprise dans la seconde table de multidiffusion étant une relation de mise en correspondance entre l'identifiant du dispositif terminal cible (11, 12, 13, 14, 15, 16, 17), un identifiant du réseau local cible, et l'identifiant du groupe de multidiffusion cible, et
avant l'envoi, par le dispositif de réseau d'accès cible (21, 22, 23) sur la base de la seconde table de multidiffusion, des données de multidiffusion au dispositif terminal cible (11, 12, 13, 14, 15, 16, 17) correspondant à l'identifiant du groupe de multidiffusion cible, le procédé comprenant en outre : la réception, par le dispositif de réseau d'accès cible (21, 22, 23), d'une relation de mise en correspondance entre un identifiant du dispositif terminal source (11, 12, 13, 14, 15, 16, 17) et l'identifiant du réseau local cible en provenance du dispositif de plan de commande de réseau central (41), ou
les données de multidiffusion reçues par le dispositif de réseau d'accès cible (21, 22, 23) en provenance du dispositif de plan d'utilisateur de réseau central (31) transportant l'identifiant du réseau local cible.

8. Procédé selon la revendication 6 ou 7,
si le dispositif de réseau d'accès cible (21, 22, 23) est un premier dispositif de réseau d'accès auquel accède le dispositif terminal source (11, 12, 13, 14, 15, 16, 17), et que le dispositif terminal source (11, 12, 13, 14, 15, 16, 17) est transféré du premier dispositif de réseau d'accès à un second dispositif de réseau d'accès, après la réception, par un dispositif de réseau d'accès cible (21, 22, 23), d'une seconde table de multidiffusion en provenance d'un dispositif de plan de commande de réseau central (41), le procédé comprenant en outre : la réception, par le dispositif de réseau d'accès cible (21, 22, 23), d'une première demande en provenance du dispositif de plan de commande de réseau central (41) et la suppression, sur la base de la première demande, d'une relation de mise en correspondance entre l'identifiant du dispositif terminal source (11, 12, 13, 14, 15, 16, 17) et un identifiant d'un groupe de multidiffusion auquel appartient le dispositif terminal source (11, 12, 13, 14, 15, 16, 17) dans la seconde table de multidiffusion ; ou
si le dispositif terminal source (11, 12, 13, 14, 15, 16, 17) est transféré d'un premier dispositif de réseau d'accès à un second dispositif de réseau d'accès, et que le dispositif de réseau d'accès cible (21, 22, 23) est le second dispositif de réseau d'accès, après la réception, par un dispositif de réseau d'accès cible (21, 22, 23), d'une seconde table de multidiffusion en provenance d'un dispositif de plan de commande de réseau central (41), le procédé comprenant en outre : la réception, par le dispositif de réseau d'accès cible (21, 22, 23), d'une relation de mise en correspondance entre l'identifiant du dispositif terminal source (11, 12, 13, 14, 15, 16, 17) et un identifiant d'un groupe de multidiffusion auquel appartient le dispositif terminal source (11, 12, 13, 14, 15, 16, 17) en provenance du dispositif de plan de commande de réseau central (41).

9. Procédé selon l'une quelconque des revendications 6 à 8, l'envoi, par le dispositif de réseau d'accès cible (21, 22, 23) sur la base de la seconde table de multidiffusion, des données de multidiffusion au dispositif terminal cible (11, 12, 13, 14, 15, 16, 17) correspondant à l'identifiant du groupe de multidiffusion cible comprenant :
la recherche, par le dispositif de réseau d'accès cible (21, 22, 23), de la seconde table de multidiffusion sur la base de l'identifiant qui est du groupe de multidiffusion cible et qui est transporté dans les données de multidiffusion, afin d'obtenir l'identifiant qui est du dispositif terminal cible (11, 12, 13, 14, 15, 16, 17) et qui correspond à l'identifiant du groupe de multidiffusion cible ; et
l'envoi, par le dispositif de réseau d'accès cible (21, 22, 23), des données de multidiffusion au dispositif terminal cible (11, 12, 13, 14, 15, 16, 17) sur la base de l'identifiant du dispositif terminal cible (11, 12, 13, 14, 15, 16, 17).

10. Dispositif de plan de commande de réseau central (41), comprenant des moyens configurés pour réaliser le procédé selon l'une quelconque des revendications 1 à 5.

11. Dispositif de réseau d'accès, comprenant des moyens configurés pour réaliser le procédé selon l'une quelconque des revendications 6 à 9.
